# EUROPÄISCHE PATENTANMELDUNG

(11) **EP 4 112 396 A1**
(43) Veröffentlichungstag der Anmeldung: **04.01.2023**
(21) Anmeldenummer: 22161543.8
(22) Anmeldetag: 26.06.2019
(51) Int. Cl.: B60R 25/30, B60R 1/074

(54) **SENSORVORRICHTUNG FÜR EIN FAHRZEUG**

(30) Priorität: 28.06.2018 DE 102018115633
(62) Teilanmeldung aus: 19182690.8
(71) Anmelder: Huf Hülsbeck & Fürst GmbH & Co. KG, 42551 Velbert (DE)
(72) Erfinder: HILD, Sven, 58089 Hagen (DE); Mönig, Stefan, 58332 Schwelm (DE)

(57) **Zusammenfassung**

Die Erfindung betrifft eine Sensorvorrichtung (10) für ein Fahrzeug (100), aufweisend: eine Steuereinheit (11) zum Betätigen eines bewegbaren Teils (101), insbesondere einer Tür (101) oder eines Seitenspiegels (103), des Fahrzeuges (100), und eine Sensoreinheit (12) zur Überwachung mindestens eines ersten Aktivierungsbereiches (A1), wobei die Steuereinheit (11) dazu ausgeführt ist, das bewegbare Teil (101) des Fahrzeuges (100) zu betätigen, wenn mindestens eine Aktivierungshandlung (H1, H2, B1, B2) eines Benutzers im ersten Aktivierungsbereich (A1) durch die Sensoreinheit (12) erfasst wurde. Hierzu ist es erfindungsgemäß vorgesehen, dass die Sensoreinheit (12) dazu ausgeführt ist, die mindestens eine Aktivierungshandlung (H1, H2, B1, B2) des Benutzers mithilfe von elektromagnetischen Wellen im Radiofrequenzbereich zu erfassen.

## Beschreibung

Die Erfindung betrifft eine Sensorvorrichtung für ein Fahrzeug nach dem Oberbegriff des unabhängigen Vorrichtungsanspruches. Ferner betrifft die Erfindung einen Türgriff nach dem nebengeordneten unabhängigen Vorrichtungsanspruch und einen Seitenspiegel nach dem weiteren nebengeordneten unabhängigen Vorrichtungsanspruch. Zudem betrifft die Erfindung ein Verfahren zum Betreiben einer Sensorvorrichtung nach dem Oberbegriff des unabhängigen Verfahrensanspruches.

Bekannte Sensorvorrichtungen zum Betätigen eines bewegbaren Teils, beispielsweise einer Tür, eines Fahrzeuges weisen zumeist Sensoren auf, die Informationen mit der Umgebung des Fahrzeuges austauschen können. Als Sensoren werden dabei zumeist berührungslose kapazitive Sensoren eingesetzt. Der Betrieb solcher Sensoren erweist sich jedoch als schwierig, da das kapazitive Feld durch Verschmutzungen leicht verzerrt werden kann. Außerdem erfordern kapazitive Sensoren eine relativ aufwendige Steuerung. Zudem sind solche Sensorvorrichtungen zumeist in deren Funktion beschränkt.

Es ist daher Aufgabe der vorliegenden Erfindung, die voranstehend beschriebenen Nachteile zumindest teilweise zu überwinden. Zum einen ist es Aufgabe der vorliegenden Erfindung, eine Sensorvorrichtung für ein Fahrzeug bereitzustellen, welche eine verbesserte und erweiterte Funktionsweise sowie einfache Ansteuerung ermöglicht. Zum anderen ist es Aufgabe der vorliegenden Erfindung, einen entsprechenden Türgriff und einen entsprechenden Seitenspriegel bereitzustellen, die mit der erfindungsgemäßen Sensorvorrichtung ausgestattet sind. Zudem ist es Aufgabe der vorliegenden Erfindung, ein verbessertes Verfahren zum Betreiben einer solchen Sensorvorrichtung zur Verfügung zu stellen.

Die voranstehende Aufgabe wird durch sämtliche Merkmale der unabhängigen Vorrichtungsansprüche, insbesondere aus dem kennzeichnenden Teil des ersten unabhängigen Vorrichtungsanspruches, und durch sämtliche Merkmale des unabhängigen Verfahrensanspruches, insbesondere aus dem kennzeichnenden Teil, gelöst. Weitere Vorteile und Details der Erfindung ergeben sich aus den jeweiligen Unteransprüchen, der Beschreibung und den Zeichnungen. Dabei gelten Vorteile und Details, die im Zusammenhang mit der erfindungsgemäßen Sensorvorrichtung und mit dem erfindungsgemäßen Türgriff oder Seitenspiegel beschrieben sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Die Erfindung stellt eine Sensorvorrichtung für ein Fahrzeug bereit, die eine Steuereinheit zum Betätigen eines bewegbaren Teils, insbesondere einer Tür oder eines Seitenspiegels, des Fahrzeuges, und eine Sensoreinheit zur Überwachung mindestens eines ersten Aktivierungsbereiches des bewegbaren Teils des Fahrzeuges aufweist, wobei die Steuereinheit dazu ausgeführt ist, das bewegbare Teil des Fahrzeuges zu betätigen, wenn mindestens eine Aktivierungshandlung eines Benutzers im ersten Aktivierungsbereich durch die Sensoreinheit erfasst wurde. Erfindungsgemäß ist die Sensoreinheit dazu ausgeführt, die mindestens eine Aktivierungshandlung des Benutzers mithilfe von elektromagnetischen Wellen im Radiofrequenzbereich (Radarwellen) zu erfassen. Die Sensorvorrichtung kann dabei in Form einer einzeln handhabbaren Moduleinheit, bspw. in Form eines Chips, vorzugsweise eines Radarchips, ausgebildet sein, die insbesondere als eine zusammenhängende Baueinheit am Kraftfahrzeug befestigbar ist.

Bei einer Sensorvorrichtung zum Betätigen eines bewegbaren Teils in Form einer Tür des Fahrzeuges kann die Sensorvorrichtung vorteilhafterweise direkt in einem Türgriff angeordnet bzw. dort von außen geschützt und/oder unsichtbar verbaut sein. Gleichwohl ist es aber auch denkbar, dass eine solche Sensorvorrichtung beabstandet zum Türgriff an der Tür, an einer B-Säule oder in einem Seitenspiegel des Fahrzeuges verbaut sein kann. Auch dort kann die Sensoreinheit verdeckt angeordnet sein.

Bei einer Sensorvorrichtung zum Betätigen eines bewegbaren Teils in Form eines Seitenspiegels des Fahrzeuges kann die Sensorvorrichtung beispielsweise direkt im Seitenspiegel angeordnet bzw. dort von außen geschützt und/oder unsichtbar verbaut sein. Gleichwohl ist es aber auch denkbar, dass eine solche Sensorvorrichtung beabstandet zum Seitenspiegel an einer B-Säule oder in einem Türgriff des Fahrzeuges verbaut sein kann.

Um das bewegbare Teil des Fahrzeuges zu betätigen, kann die Sensorvorrichtung im Sinne der Erfindung mit einer Schließvorrichtung der Tür und/oder einer Antriebsvorrichtung des Seitenspiegels des Fahrzeuges in einer Kommunikationsverbindung stehen, um das bewegbare Teil, also die Tür oder den Seitenspiegel, entsprechend anzusteuern. Bei einer Tür als das bewegbare Teil des Fahrzeuges im Sinne der Erfindung ist es denkbar, dass die Steuereinheit der Sensorvorrichtung unterschiedliche Steuersignale zum Verriegeln, Entriegeln, Öffnen und/oder Schließen der Tür in Abhängigkeit von der erfassten Aktivierungshandlung an die Schließvorrichtung der Tür schicken kann. Bei einem Seitenspiegel als das bewegbare Teil des Fahrzeuges im Sinne der Erfindung ist es denkbar, dass die Steuereinheit der Sensorvorrichtung unterschiedliche Steuersignale zum Aufklappen, Zuklappen oder sogar Ausrichten des Seitenspiegels an die Antriebvorrichtung des Seitenspiegels schicken kann.

Die Sensorvorrichtung im Sinne der Erfindung kann weiterhin mit einer Sicherheitsvorrichtung des Fahrzeuges in einer Kommunikationsverbindung stehen, um eine Berechtigung eines Benutzers zu verifizieren, um bewegbare Teile des Fahrzeuges betätigen zu dürfen. Gleichwohl ist es aber auch denkbar, dass die Sensorvorrichtung selbst eine Sicherheitsabfrage ausführen kann. Für die Kommunikationsverbindung mit der Sicherheitsvorrichtung kann eine drahtlose Verbindung, beispielsweise mittels Funkwellen, oder eine Verbindung über ein Bus genutzt werden, die mithilfe der Steuereinheit der Sensorvorrichtung ausgeführt werden kann. Somit kann die Sensorvorrichtung einen Teil eines Keyless-Go-Systems oder eines Keyless-Entry-Systems des Fahrzeuges bilden. Weiterhin ist es im Sinne der Erfindung denkbar, dass die Sensorvorrichtung eine einzige zusammenhängende Moduleinheit bilden kann, die sogar einhändig für eine einfache Montage am Fahrzeug gehandhabt werden kann.

Die Erfindung erkennt dabei, dass die Sensoreinheiten, die Radarwellen zum Informationsaustausch mit der Umgebung des Fahrzeuges verwenden, zunehmend in unterschiedlichen Assistenzsystemen in Fahrzeugen Verwendung finden. Daher verfügen die Fahrzeuge zumeist mit einer geeigneten Elektronik und entsprechenden Steuersoftware.

Der Erfindungsgedanke liegt dabei darin, dass zum Betätigen des bewegbaren Teils, insbesondere einer Tür (Verriegeln, Entriegeln, Öffnen und/oder Schließen) oder eines Seitenspiegels (Aufklappen, Zuklappen, Ausrichten), des Fahrzeuges, eine Sensorvorrichtung bereitgestellt wird, die mithilfe von elektromagnetischen Wellen im Radiofrequenzbereich bzw. Radarwellen entsprechende Aktivierungshandlungen eines Benutzers im ersten Aktivierungsbereich erfasst. Für einen bestimmten Vorgang zum Betätigen des bewegbaren Teils kann eine entsprechende Aktivierungshandlung vorgesehen sein. Mithilfe von Radarwellen kann nicht nur eine präzise Abstandsmessung, sondern auch eine Geschwindigkeitsmessung und/oder eine Winkelmessung bereitgestellt werden. Daher können mithilfe von Radarwellen unterschiedliche, sogar komplizierte Gesten sowie 2D- und/oder 3D Bewegungsmuster erkannt werden. Bei den Radarwellen kann der Aktivierungsbereich, umfassend die Bandbreite und die Reichweite der Sensoreinheit, auf eine einfache Weise, beispielsweise mithilfe einer entsprechenden Sendefrequenz und/oder Sendepulsdauer eingestellt werden. Dies macht eine solche Sensoreinheit auf eine vorteilhafte Weise geeignet, um unterschiedliche Aktivierungshandlungen zu erkennen. Eine solche Sensorvorrichtung ist außerdem relativ resistent gegen Umwelteinflüsse. Aus den genannten Gründen eignet sich eine solche Sensorvorrichtung, die Radarwellen nutzt, zum Betätigen der bewegbaren Teile des Fahrzeuges, wie zum Beispiel einer Tür oder eines Seitenspiegels.

Dabei ist es denkbar, dass die Sensorvorrichtung im Rahmen der Erfindung eine eigene Sensoreinheit verwenden kann, um die mindestens eine Aktivierungshandlung des Benutzers mithilfe von Radarwellen zu erfassen.

Gleichwohl ist es aber auch denkbar, dass die Sensorvorrichtung die vorhandene Sensorik des Fahrzeuges, beispielsweise eines Assistenzsystems des Fahrzeuges, nutzen kann, um einen ersten Aktivierungsbereich des bewegbaren Teils des Fahrzeuges mithilfe von elektromagnetischen Wellen im Radiofrequenzbereich auf mindestens eine Aktivierungshandlung des Benutzers zu überwachen. Als ein entsprechendes Assistenzsystem des Fahrzeuges ist zum Beispiel ein Assistenzsystem zum automatisierten oder autonomen Fahren, zum automatisierten oder autonomen Einhalten einer Spur, zum automatisierten oder autonomen Überholvorgang, zum automatisierten oder autonomen Einparken und/oder zum Überwachen eines toten Winkels denkbar. Aber auch die Sensorik eines Assistenzsystems, wie zum Beispiel eines Abstandsregeltempomats, einer automatischen Distanzregelung, eines adaptiven Sicherheitssystems, einer adaptiven Bremsvorbereitung und/oder eines Stauassistenten kann dazu genutzt werden, einen ersten Aktivierungsbereich des bewegbaren Teils des Fahrzeuges auf mindestens eine Aktivierungshandlung des Benutzers zu überwachen.

Zudem ist es denkbar, dass die Sensorvorrichtung mit der erfindungsgemäßen Sensoreinheit eine entsprechende Sensorik für mindestens ein Assistenzsystem des Fahrzeuges bereitstellen kann.

Da das bewegbare Teil des Fahrzeuges zumeist bei einem stehenden Fahrzeug betätigt wird und die Assistenzsysteme des Fahrzeuges meistens bei einem fahrenden Fahrzeug aktiviert werden, kann es vorteilhaft sein, wenn die Sensorvorrichtung in Abhängigkeit von der Geschwindigkeit des Fahrzeuges entweder zum Betätigen des bewegbaren Teils des Fahrzeuges oder zum assistierten und/oder autonomen Fahren des Fahrzeuges verwendet wird.

Somit können mithilfe der Erfindung mehrere wesentliche Vorteile erreicht werden. Die Betätigung des bewegbaren Teils des Fahrzeuges kann sicher, zuverlässig und bequem ausgeführt werden. Eine einfache Montage und Steuerung der Sensorvorrichtung kann gewährleistet werden. Die Ressourcen innerhalb der Sensorvorrichtung und des Fahrzeuges können auf eine vorteilhafte Weise ausgenutzt werden und eine Sensorvorrichtung mit einer erweiterten Fiktionalität kann bereitgestellt werden.

Ferner kann die Erfindung bei einer Sensorvorrichtung vorsehen, dass die Steuereinheit zur Steuerung mindestens eines Assistenzsystems des Fahrzeuges ausgeführt ist oder zumindest dazu beitragen kann. Somit kann die Steuereinheit mit einer erweiterten Funktionalität bereitgestellt werden. Die Steuereinheit kann die Sensoreinheit in mindestens einem Betriebsmodus der Sensorvorrichtung für die Belange des Assistenzsystems zur Verfügung stellen, um Informationen, wie zum Beispiel den Abstand, die Geschwindigkeit und/oder die Winkelausrichtung zu anderen stehenden und/oder fahrenden Verkehrsteilnehmern, zu erfassen.

Weiterhin ist es denkbar, dass die Steuereinheit mit einer fahrzeugseitigen Steuervorrichtung eines Assistenzsystems des Fahrzeuges in eine Kommunikationsverbindung bringbar sein kann. Somit kann die Steuereinheit die Informationen der Sensoreinheit (Sensordaten) der fahrzeugseitigen Steuervorrichtung übermitteln, beispielsweise mithilfe von Funkwellen oder über einen Bus. Diese Information können im Rahmen des Assistenzsystems verwendet werden, ohne eine separate Sensorik für das Assistenzsystem bereitstellen zu müssen oder zumindest diese Sensorik zu unterstützen.

Als Assistenzsysteme im Sinne der Erfindung, die mithilfe der Steuereinheit angesteuert und/oder mit Sensordaten versorgt werden, sind folgende Assistenzsysteme denkbar: Assistenzsysteme zum automatisierten oder autonomen Fahren, Assistenzsysteme zum automatisierten oder autonomen Einhalten einer Spur, Assistenzsysteme zum automatisierten oder autonomen Überholvorgang, Assistenzsysteme zum automatisierten oder autonomen Einparken und/oder Assistenzsysteme zum Überwachen eines toten Winkels. Solche Assistenzsysteme weisen zumeist Aktivierungsbereiche bzw. Überwachungsbereiche auf, die sich im seitlichen Bereich des Fahrzeuges erstrecken. Somit kann die Sensorvorrichtung zum Betätigen von bewegbaren Teilen, die im Seitenbereich des Fahrzeuges angeordnet sind, wie zum Beispiel eine Tür oder ein Seitenspiegel solche seitlichen Überwachungsbereiche mithilfe der eigenen Sensoreinheit zur Verfügung stellen. Gleichwohl ist es denkbar, dass die Sensoreinheit beabstandet zum jeweiligen bewegbaren Teil des Fahrzeuges angeordnet sein kann. Grundsätzlich kann die Sensoreinheit im bewegbaren Teil selbst, also in der Tür (beispielsweise hinter der Außenhaut der Tür) oder im Seitenspiegel (beispielsweise im Seitenspiegel verbaut), oder in einem Türgriff (beispielsweise im Türgriff verbaut), mithilfe von welchem die Tür des Fahrzeuges bewegt werden kann, angeordnet sein. Zudem ist es denkbar, dass die Sensoreinheit im Bereich der B-Säule verbaut werden kann. Die Sensorvorrichtung kann verdeckt hinter einem radardurchlässigen Material angeordnet sein oder an einer Öffnung in einer Außenhaut des entsprechenden Bauteils.

Des Weiteren kann die Erfindung bei einer Sensorvorrichtung vorsehen, dass die Sensoreinheit für eine Abstandsmessung, eine Geschwindigkeitsmessung und/oder eine Winkelmessung innerhalb des ersten Aktivierungsbereiches und/oder eines zweiten Aktivierungsbereiches und/oder eines dritten Aktivierungsbereiches ausgeführt ist. Auf diese Weise können mithilfe der Sensoreinheit Informationen erfasst werden, die zum Ansteuern mindestens eines Assistenzsystems des Fahrzeuges benutzt werden können.

Zudem kann die Erfindung bei einer Sensorvorrichtung vorsehen, dass die Sensorvorrichtung mindestens einen ersten Betriebsmodus, einen zweiten Betriebsmodus und/oder einen dritten Betriebsmodus aufweist. Vorteilhafterweise kann der erste Betriebsmodus zum Betätigen des bewegbaren Teils des Fahrzeuges, beispielsweise zur Ansteuerung einer Schließvorrichtung einer Tür und/oder einer Antriebsvorrichtung eines Seitenspiegels des Fahrzeuges, dienen. Eine Voraussetzung für den ersten Betriebsmodus kann vorteilhafterweise sein, dass das Fahrzeug steht bzw. sich mit einer geringen Geschwindigkeit unter 3 km/h bewegt. Somit kann die Sicherheit bereitgestellt werden, dass bei Fahren des Fahrzeuges die Türen des Fahrzeuges nicht ungewollt geöffnet oder die Seitenspiegel zugeklappt werden.

Der zweite Betriebsmodus der Sensorvorrichtung kann vorteilhafterweise bei einem fahrenden Fahrzeug mit einer Geschwindigkeit zwischen 3 km/h und 30 km/h, insbesondere zwischen 3 km/h und 20 km/h, vorzugsweise zwischen 3 km/h und 10 km/h aktiviert werden. Dies ist der Geschwindigkeitsbereich, in welchem bestimmte Assistenzsysteme vorteilhaft sein können, wie zum Beispiel: ein Stauassistent, eine Einparkhilfe oder dergleichen. Der zweite Betriebsmodus der Sensorvorrichtung im Rahmen der Erfindung kann somit diesen Assistenzsystemen gewidmet sein.

Der dritte Betriebsmodus der Sensorvorrichtung kann vorteilhafterweise bei einem fahrenden Fahrzeug ab einer Geschwindigkeit ab 10 km/h, insbesondere ab 20 km/h, vorzugsweise ab 30 km/h aktiviert werden. Dies ist der Geschwindigkeitsbereich, in welchem ebenfalls bestimmte Assistenzsysteme von Bedeutung sein können, wie zum Beispiel: ein Abstandsregeltempomat, eine automatische Distanzregelung oder dergleichen. Der dritte Betriebsmodus der Sensorvorrichtung kann somit im Rahmen der Erfindung diesen Assistenzsystemen zugeordnet sein.

Außerdem kann die Erfindung vorsehen, dass bestimmte Assistenzsysteme die erfindungsgemäße Sensorvorrichtung im zweiten Betriebsmodus und andere Assistenzsysteme die Sensorvorrichtung im dritten Betriebsmodus nutzen können.

Ferner kann die Erfindung bei einer Sensorvorrichtung vorsehen, dass in mindestens einem Betriebsmodus die Sensorvorrichtung zum Erfassen der mindestens einen Aktivierungshandlung des Benutzers im ersten Aktivierungsbereich betreibbar ist. Somit kann die Sensorvorrichtung zum Betätigen des bewegbaren Teils des Fahrzeuges verwendet werden. Durch die radarbasierte Sensoreinheit können unterschiedlichste Aktivierungshandlungen in Form von Gesten bzw. Bewegungsmustern, Annäherungsversuchen oder einfachen Präsenzen im ersten Aktivierungsbereich erfasst, bestimmt und voneinander unterschieden werden. Somit kann beim Betätigen des bewegbaren Teils ein erhöhter Komfort bereitgestellt werden. Bei einer Tür als das bewegbare Teil des Fahrzeuges im Sinne der Erfindung kann es vorteilhaft sein, dass die Sensorvorrichtung zunächst eine Präsenz eines Benutzers detektieren kann. Danach kann eine Sicherheitsabfrage ausgeführt oder eingeleitet werden. Zum Ver- oder Entriegeln der Tür können unterschiedliche Bewegungsmuster, beispielsweise in unterschiedliche Richtungen ausführbare Streichbewegungen entlang eines Türgriffes, vorgesehen sein. Zum Aus- oder Zuklappen von Seitenspiegeln können ebenfalls unterschiedliche Bewegungsmuster, beispielsweise in unterschiedliche Richtungen ausführbare Streichbewegungen zum und vom Seitenspiegel, vorgesehen sein.

Weiterhin kann die Erfindung bei einer Sensorvorrichtung vorsehen, dass in mindestens einem Betriebsmodus die Sensorvorrichtung für eine Abstandsmessung, eine Geschwindigkeitsmessung und/oder eine Winkelmessung innerhalb des ersten Aktivierungsbereiches und/oder eines zweiten Aktivierungsbereiches und/oder eines dritten Aktivierungsbereiches betreibbar ist. Somit können unterschiedliche Informationen sensiert werden, die zum Betrieb eines Assistenzsystems des Fahrzeuges von Vorteil sein können.

Des Weiteren kann die Erfindung bei einer Sensorvorrichtung vorsehen, dass in mindestens einem Betriebsmodus die Sensorvorrichtung zum Erfassen eines Hindernisses beim Betätigen des bewegbaren Teils des Fahrzeuges betreibbar ist. Somit kann eine besonders sichere und unfallfreie Betätigung des bewegbaren Teils gewährleistet werden, um das bewegbare Teil sowie umstehende Objekte nicht zu beschädigen oder Personen nicht zu gefährden.

Zudem kann die Erfindung bei einer Sensorvorrichtung vorsehen, dass in mindestens einem Betriebsmodus, beispielsweise im ersten Betriebsmodus, der Sensorvorrichtung der Sensoreinheit eine Sendefrequenz im Frequenzbereich zwischen 76 GHz und 77 GHz zugeordnet ist. Auf diese Weise kann die Sensoreinheit das Umfeld des Fahrzeuges mithilfe von Fernbereichsradarwellen (Long Range Radar oder LRR) überwachen. Dies kann bei Assistenzsystemen mit einer ersten Reichweite von bis zu 250 m von Vorteil sein. Aber auch zum Erkennen eines Benutzers, der sich dem Fahrzeug nähert, kann eine hohe Reichweite von Vorteil sein, um einen verzögerungsfreien Zugang zum Fahrzeug zu ermöglichen. Denkbar ist ferner, dass die Sensoreinheit in mindestens einem Betriebsmodus, beispielsweise im ersten Betriebsmodus, als ein Impulsradar oder als ein Dauerstrichradar (CW-Radar), bspw. als ein Moduliertes Dauerstrichradar (FMCW-Radar) betrieben werden kann.

Außerdem kann die Erfindung bei einer Sensorvorrichtung vorsehen, dass in mindestens einem Betriebsmodus, beispielsweise im zweiten Betriebsmodus, der Sensorvorrichtung der Sensoreinheit eine Sendefrequenz im Frequenzbereich zwischen 77 GHz und 81 GHz zugeordnet ist. Bei diesen Frequenzen kann eine relativ kleine Sendeantenne verwendet werden. Die relativ breite Bandbreite sorgt für eine hohe Auflösung. Auf diese Weise kann die Sensoreinheit das Umfeld des Fahrzeuges mithilfe von Nahbereichsradarwellen (Short Range Radar oder SRR) überwachen. Dies kann bei Assistenzsystemen mit einer zweiten Reichweite von bis zu 70 m von Vorteil sein. Aber auch zum Erkennen eines Benutzers, der sich dem Fahrzeug nähert, kann eine solche Reichweite von Vorteil sein, um einerseits den Überwachungsbereich einzugrenzen und dennoch einen schnellen Ablauf beim Betätigen des bewegbaren Teils zu ermöglichen. Solche Sendefrequenzen sind außerdem weniger anfällig für Reflexionen bei Durchgang durch die Schichten mit einer bestimmten Materialstärke. Denkbar ist weiterhin, dass die Sensoreinheit in mindestens einem Betriebsmodus, beispielsweise im zweiten Betriebsmodus, als ein Dauerstrichradar, insbesondere als ein Moduliertes Dauerstrichradar (FMCW-Radar) betrieben werden kann.

Ferner kann die Erfindung bei einer Sensorvorrichtung vorsehen, dass in mindestens einem Betriebsmodus, beispielsweise im dritten Betriebsmodus, der Sensorvorrichtung der Sensoreinheit eine Sendefrequenz im Frequenzbereich zwischen 77 GHz und 81 GHz zugeordnet ist. Bei diesen Frequenzen kann eine relativ kleine Sendeantenne verwendet werden. Die relativ breite Bandbreite sorgt für eine hohe Auflösung. Mit dieser Bandbreite kann die Sensoreinheit das Umfeld des Fahrzeuges mithilfe von Nahbereichsradarwellen (Ultra Short Range Radar oder USRR) überwachen. Dies kann bei Assistenzsystemen mit einer dritten Reichweite von bis zu 30 m von Vorteil sein. Aber auch zum Erkennen eines Benutzers, der sich dem Fahrzeug nähert, kann eine solche Reichweite von Vorteil sein, um einen begrenzten Überwachungsbereich bereitzustellen und dennoch einen ausreichend schnellen Ablauf beim Betätigen des bewegbaren Teils zu ermöglichen. Solche Sendefrequenzen weisen Wellenlänge auf, die durch Schichten mit bestimmten Materialstärken relativ störungsfrei durchgehen können. Außerdem ist der Einfluss von Lackierungsschichten bei solchen Wellenlängen relativ gering, sodass die Sensorvorrichtung auf eine vorteilhafte Weise mit einer hohen Designfreiheit an das Erscheinungsbild des Fahrzeuges angepasst werden kann. Denkbar ist des Weiteren, dass die Sensoreinheit in mindestens einem Betriebsmodus, beispielsweise im dritten Betriebsmodus, als ein Dauerstrichradar, insbesondere als ein Moduliertes Dauerstrichradar (FMCW-Radar) betrieben werden kann.

Weiterhin kann die Erfindung bei einer Sensorvorrichtung vorsehen, dass in mindestens einem Betriebsmodus der Sensorvorrichtung der Sensoreinheit eine erste Bandbreite oder eine zweite Bandbreite zugeordnet sind/ist. Die Bandbreite kann auf eine einfache Weise die Breite des Aktivierungsbereiches bestimmen. Der Aktivierungsbereich bzw. der Überwachungsbereich kann dabei in Form einer Erfassungskeule ausgeführt sein. Unterschiedliche Bandbreiten können für verschiedene Funktionen von Vorteil sein. So ist zum Beispiel bei einem Abstandsregeltempomat und/oder einer automatischen Distanzregelung ein schmaler Aktivierungsbereich von Vorteil, der nur eine Spur vor dem fahrenden Fahrzeug abdecken kann. Bei einem anderen Assistenzsystem oder zum Betätigen des bewegbaren Teils kann ein breiter Aktivierungsbereich von Vorteil sein, um eine möglichst umfassende Überwachung des Aktivierungsbereiches um das Fahrzeug herum zu ermöglichen.

Des Weiteren kann die Erfindung bei einer Sensorvorrichtung vorsehen, dass die Sensoreinheit dazu ausgeführt ist, eine Anwesenheit und/oder eine Annäherung des Benutzers als die mindestens eine Aktivierungshandlung im ersten Aktivierungsbereich zu erfassen, und/oder dass die Sensoreinheit dazu ausgeführt ist, mindestens ein erstes Bewegungsmuster oder ein zweites Bewegungsmuster durch eine Hand des Benutzers als die mindestens eine Aktivierungshandlung im ersten Aktivierungsbereich zu erfassen. Somit kann die Sensorvorrichtung in Kombination mit unterschiedlichen Türgriffen eingesetzt werden, wie z. B. feststehenden Türgriffen, herausfahrbaren Türgriffen oder beweglichen Türgriffen. Das Erfassen eines ersten Bewegungsmusters oder eines zweiten Bewegungsmusters kann ebenfalls vorteilhaft sein, um einen Seitenspiegel auf- oder zuzuklappen.

Zudem kann die Erfindung bei einer Sensorvorrichtung vorsehen, dass die Steuereinheit zur Abfrage einer Zugangsberechtigung des Benutzers ausgeführt ist, oder dass die Steuereinheit mit einer Sicherheitsvorrichtung des Fahrzeuges in eine Kommunikationsverbindung bringbar ist, um eine Zugangsberechtigung des Benutzers zu verifizieren. Somit kann die Sensorvorrichtung einen Teil eines Keyless-Go-Systems oder eines Keyless-Entry-Systems bilden.

Außerdem ist es im Rahmen der Erfindung bei einer Sensorvorrichtung denkbar, dass die Steuereinheit dazu ausgeführt ist, eine Abfrage einer Zugangsberechtigung des Benutzers auszuführen oder zu veranlassen, wenn mithilfe der Sensoreinheit eine Anwesenheit und/oder eine Annäherung des Benutzers als die mindestens eine Aktivierungshandlung im ersten Aktivierungsbereich erfasst wurde, oder dass die Steuereinheit von einer Sicherheitsvorrichtung des Fahrzeuges einschaltbar ist, um mithilfe der Sensoreinheit den ersten Aktivierungsbereich des bewegbaren Teils des Fahrzeuges auf mindestens eine Aktivierungshandlung zu überwachen. Somit können die Einsatzmöglichkeiten der Sensorvorrichtung in Verbindung mit unterschiedlichen Sicherheitsvorrichtungen erweitert werden.

Ferner kann die Erfindung vorsehen, dass die Steuereinheit dazu ausgeführt ist, zum Betätigen des bewegbaren Teils ein Entriegeln des bewegbaren Teils zu veranlassen, wenn mithilfe der Sensoreinheit eine Anwesenheit und/oder eine Annäherung des Benutzers oder ein erstes Bewegungsmuster durch eine Hand des Benutzers als die mindestens eine Aktivierungshandlung im ersten Aktivierungsbereich erfasst wurde. Dies kann bei Fahrzeugen von Vorteil sein, die eine elektronisch ansteuerbare Schließvorrichtung, zum Beispiel in Form einer Zentralverriegelung, aufweisen.

Weiterhin kann die Erfindung vorsehen, dass die Steuereinheit dazu ausgeführt ist, zum Betätigen des bewegbaren Teils ein Verriegeln des bewegbaren Teils zu veranlassen, wenn ein zweites Bewegungsmuster durch eine Hand des Benutzers als die mindestens eine Aktivierungshandlung im ersten Aktivierungsbereich erfasst wurde. Somit kann auch der Verriegelungsvorgang des bewegbaren Teils komfortabel ausgeführt werden.

Des Weiteren kann die Erfindung vorsehen, dass die Steuereinheit dazu ausgeführt ist, zum Betätigen des bewegbaren Teils ein Öffnen des bewegbaren Teils zu veranlassen, wenn mithilfe der Sensoreinheit ein erstes Bewegungsmuster durch eine Hand des Benutzers als die mindestens eine Aktivierungshandlung im ersten Aktivierungsbereich erfasst wurde.

Dadurch kann der Benutzerkomfort gesteigert werden, ohne den Türgriff herausziehen zu müssen. Dies kann bei Fahrzeugen von Vorteil sein, die feststehende Türgriffe aufweisen.

Zudem ist es denkbar, dass die Steuereinheit dazu ausgeführt ist, zum Betätigen des bewegbaren Teils ein Einklappen oder Ausklappen des bewegbaren Teils zu veranlassen, wenn mithilfe der Sensoreinheit ein erstes Bewegungsmuster oder ein zweites Bewegungsmuster durch eine Hand des Benutzers als die mindestens eine Aktivierungshandlung im ersten Aktivierungsbereich erfasst wurde. Somit kann ein Betätigen des Seitenspiegels komfortabel gestaltet werden.

Außerdem ist es im Rahmen der Erfindung bei einer Sensorvorrichtung möglich, dass die Steuereinheit dazu ausgeführt ist, ein Betätigen des bewegbaren Teils zu stoppen, wenn ein Hindernis erfasst wurde, das der Betätigung des bewegbaren Teils im Wege steht. Somit kann das bewegbare Teil sicher betrieben werden und die Gefahren von Beschädigungen bei umliegenden Gegenständen oder von Verletzungen bei lebenden Objekten im Umfeld des bewegbaren Teils des Fahrzeuges reduzieren werden.

Ferner kann die Erfindung bei einer Sensorvorrichtung mindestens eine weitere Sensoreinheit vorsehen, um die mindestens eine Aktivierungshandlung des Benutzers mithilfe von elektromagnetischen Wellen im optischen Frequenzbereich oder im Infrarotbereich oder mithilfe einer kapazitiven Messung zu erfassen. Somit kann eine Kombinationssensorik im Rahmen der Sensorvorrichtung bereitgestellt werden, die auf eine vorteilhafte Weise die Vorteile mehrerer Technologien für bestimmte Aktivierungshandlungen ausnutzen kann. Auf diese Weise ist die Sensorvorrichtung im Rahmen der Erfindung breit einsetzbar und mit unterschiedlichen Technologien kombinierbar, die bei feststehenden Türgriffen, herausfahrbaren Türgriffen oder beweglichen Türgriffen Anwendung finden können.

Nach einem weiteren Vorteil der Erfindung kann die Sensorvorrichtung am bewegbaren Teil, an einem Türgriff des bewegbaren Teils, an einem Seitenspiegel oder an einer B-Säule des Fahrzeuges anordenbar sein. Die Sensorvorrichtung kann somit im seitlichen Bereich des Fahrzeuges eingesetzt werden. Auf diese Weise kann die Sensorvorrichtung in vorhandene Assistenzsysteme des Fahrzeuges integriert werden oder weitere Assistenzsysteme ausbilden, die seitliche Überwachungsbereiche aufweisen. Zudem kann die Erfindung zum Betätigen von bewegbaren Teilen des Fahrzeuges dienen, die zur Seite des Fahrzeuges bewegt werden, wie zum Beispiel eine Tür oder ein Seitenspiegel des Fahrzeuges.

Weiterhin kann die Erfindung auf eine vorteilhafte Weise vorsehen, dass die Sensorvorrichtung mit der Steuereinheit, der Sensoreinheit, und ggf. einer weiteren Sensoreinheit, in Form einer modularen Baueinheit ausgeführt ist. Somit können eine einfache Handhabung und eine bequeme Montage der Sensorvorrichtung bereitgestellt werden.

Des Weiteren kann die Erfindung vorsehen, dass die Sensorvorrichtung eine Trägerplatte für die Steuereinheit, die Sensoreinheit, und ggf. eine weitere Sensoreinheit, aufweist. Somit kann ein einfacher Zusammenbau der Sensorvorrichtung bereitgestellt werden.

Zudem kann im Rahmen der Erfindung bei einer Sensorvorrichtung vorgesehen sein, dass die Sensoreinheit mindestens einen Transceiver aufweist, wobei insbesondere der Transceiver mindestens eine, vorzugsweise zwei Sendeantennen und mindestens eine, vorzugsweise vier Empfangsantennen aufweist. Somit kann eine aktive Überwachung, beispielweise in Form einer Abtastung, der Umgebung des Fahrzeuges ermöglicht werden. Der Transceiver kann mithilfe von Sendeantennen Radarwellen aussenden, die an Objekten oder Personen reflektiert werden können. Die reflektierten Radarwellen werden an den Empfangsantennen empfangen und geben Aufschluss über die erfassten Objekte oder Personen sowie deren Positionen, Bewegungen oder dergleichen. Mithilfe des Transceivers kann somit die Umgebung des Fahrzeuges analysiert werden. Mithilfe von zwei Sendeantennen und vier Empfangsantennen kann ein ausführliches Bild der Umgebung des Fahrzeuges und der Geschehnisse um das Fahrzeug herum erfasst werden, umfassend definierte Bewegungsmuster. Eine der Sendeantennen kann ein definiertes Mustersignal aussenden, welches mit dem reflektierten Empfangssignal verglichen wird.

Im Rahmen der Erfindung kann vorteilhafterweise vorgesehen sein, dass das Sendesignal mit einer Fahrzeugkennung versehen wird, um das eigene Sendesignal von Fremdsignalen zu unterscheiden. Als Fahrzeugkennung ist eine Modulation des Sendesignals möglich. Das Sendesignal kann dabei als ein Träger dienen, auf dem ein Nutzsignal aufmoduliert wird. Als Parameter für die Modulation kann die Amplitude oder die Phase des Sendesignals dienen. Die Modulation kann ferner zeitkontinuierlich oder zeitdiskret erfolgen. Grundsätzlich ist es denkbar, dass der ID-Code des berechtigten Benutzers als das Nutzsignal bei der Modulation verwendet wird. Weiterhin ist es denkbar, dass die Empfangsantennen den ID-Code als ein aufmoduliertes Nutzsignal empfangen können. Die Steuereinheit kann dann den ID-Code auswerten. Auf diese Weise kann die Sicherheitsabfrage mithilfe der Sensorvorrichtung im Rahmen der Erfindung ausgeführt werden. Nach einem weiteren Vorteil der Erfindung kann nach dem Betätigen des bewegbaren Teils die Sendevorrichtung ausgeschaltet werden.

Außerdem kann die Erfindung bei einer Sensorvorrichtung vorsehen, dass die Steuereinheit mindestens einen Microcontroller aufweist, wobei insbesondere der Microcontroller mindestens einen Wandler, mindestens eine Signalverarbeitungseinheit, mindestens eine Prozessoreinheit, mindestens eine Speichereinheit, mindestens eine Schnittstelle und/oder mindestens einen Anschluss für Kommunikation und/oder Energieversorgung aufweist. Somit kann ein autonomer Prozessor mit umfassenden Peripheriefunktionen im Rahmen der Sensorvorrichtung bereitgestellt werden. Der Microcontroller kann die Informationen der Sensoreinheit verarbeiten und analysieren, um unterschiedliche Betriebsmodi der Sensorvorrichtung sicherzustellen.

Ferner kann die Erfindung bei einer Sensorvorrichtung vorsehen, dass ein Gehäuse für die Sensorvorrichtung vorgesehen ist, um die Sensorvorrichtung geschützt vor Umwelt- und/oder Witterungseinflüssen aufzunehmen. Mithilfe des Gehäuses kann eine abgeschlossene Einheit bereitgestellt werden, die als ein Modul bzw. eine modulare Baueinheit gehandhabt werden kann.

Weiterhin ist es denkbar, dass das Gehäuse die Sensorvorrichtung komplett umschließen kann. Somit kann die Sensorvorrichtung besonders geschützt und sicher aufgenommen werden.

Des Weiteren kann die Erfindung bei einer Sensorvorrichtung vorsehen, dass das Gehäuse für die Sensorvorrichtung ein, vorteilhafterweise öffenbares, Deckelelement aufweist, durch welches die Sensorvorrichtung innerhalb des Gehäuses einbringbar ist. Somit kann ein einfacher Zusammenbau der Sensorvorrichtung gewährleistet werden. Durch das Deckelelement wird außerdem gewährleistet, dass die Sensorvorrichtung zwecks Reparatur zugänglich gemacht werden kann. Hierzu kann vorgesehen sein, dass das Deckelelement abnehmbar und/oder öffenbar ausgeführt ist. Zum Anbringen und vorzugsweise Befestigen des Deckelelementes am Gehäuse können eine Rastverbindung und/oder eine Gelenkverbindung und/oder eine Labyrinthführung zwischen dem Deckelelement und dem Gehäuse vorgesehen sein.

Ferner ist es im Rahmen der Erfindung möglich, dass durch das Deckelelement eine fahrzeugseitige Öffnung verschließbar sein kann, beispielsweise an einem Türgriff des bewegbaren Teils, an einem Seitenspiegel oder an einer B-Säule des Fahrzeuges. Gleichwohl ist es aber auch denkbar, dass als Deckelelement im Rahmen der Erfindung ein Abschnitt einer Außenhaut des bewegbaren Teils des Fahrzeuges oder einer Außenhaut eines Türgriffes oder einer Außenhaut eines Seitenspiegels dienen kann. Somit kann die Sensorvorrichtung auf eine vorteilhafte Weise geschützt und unauffällig hinter der Außenhaut des jeweiligen Bauteils angeordnet werden und optimal an das Erscheinungsbild des Fahrzeuges angepasst werden. Dabei ist es denkbar, dass eine korrespondierende Rastverbindung und/oder eine Gelenkverbindung und/oder eine Labyrinthführung zwischen einer Innenseite der Außenhaut des jeweiligen Bauteils bzw. einem Rand der Öffnung und dem Gehäuse der Sensorvorrichtung vorgesehen sein kann.

Zudem kann das Gehäuse für die Sensorvorrichtung und/oder das Deckelelement aus einem radartransparenten Material, insbesondere Kunststoff, vorzugsweise Polymer, ausgebildet sein. Dadurch wird gewährleistet, dass die Ausbreitung von elektromagnetischen Wellen im Radiofrequenzbereich ungestört ist und die Sensorvorrichtung gleichzeitig geschützt vor Witterungseinflüssen angeordnet werden kann.

Außerdem kann die Erfindung vorsehen, dass das Gehäuse für die Sensorvorrichtung und/oder das Deckelelement zumindest abschnittsweise mit einer Beschichtung, vorzugsweise mit einer Materialstärke von 10 nm bis 100 nm, versehen sind/ist. Durch die Beschichtung kann das äußere Erscheinungsbild der Sensorvorrichtung designtechnisch gestaltet werden. Dabei ist es denkbar, dass die Beschichtung Zierleisten und/oder Designoberflächen und/oder eine Anzeige und/oder ein Logo und/oder einen Markennamen darstellen kann.

Ferner ist es denkbar, dass die Beschichtung beispielsweise in Form einer Lackschicht, einer Sprühschicht oder einer mithilfe von Gasphasenabscheidung oder mithilfe von Sputtern abgeschiedenen Schicht ausgebildet sein kann. Somit kann die Gestaltungsfreiheit bei der Ausführung der Beschichtung auf eine vorteilhafte Weise erweitert werden.

Weiterhin ist es denkbar, dass die Beschichtung Metallpartikel, vorzugsweise Chrom, und/oder Halbleitermaterial, vorzugsweise Silicium, aufweisen kann. Somit kann ein metallisches Erscheinungsbild der Beschichtung ermöglicht werden.

Des Weiteren kann im Rahmen der Erfindung bei einer Sensorvorrichtung vorgesehen sein, dass das Gehäuse für die Sensorvorrichtung mindestens ein oder mehrere Montagemittel aufweist, um die Sensorvorrichtung innerhalb des Gehäuses form- und/oder kraftschlüssig aufzunehmen. Somit können der Zusammenbau der Sensorvorrichtung sowie der Austausch von einzelnen Bauteilen, beispielsweise zwecks Wartung und/oder Aufrüstung der Sensorvorrichtung, auf eine vorteilhafte Weise erleichtert werden.

Zudem ist es im Rahmen der Erfindung möglich, dass die Montagemittel dazu ausgeführt sind, um die Trägerplatte der Sensorvorrichtung innerhalb des Gehäuses einzuklemmen, und/oder dass die Montagemittel eine umlaufende Nut für die Trägerplatte der Sensorvorrichtung aufweisen, in welcher die Trägerplatte einsteckbar ist. Dadurch kann der Zusammenbau der Sensorvorrichtung noch weiter vereinfacht werden.

Außerdem kann im Rahmen der Erfindung bei einer Sensorvorrichtung vorgesehen sein, dass das Gehäuse für die Sensorvorrichtung mindestens ein oder mehrere Befestigungsmittel aufweist, um die Sensorvorrichtung form- und/oder kraftschlüssig an einer fahrzeugseitigen Öffnung und/oder an einem fahrzeugseitigen Trägerelement zu befestigen. Somit kann eine einfache und bequeme Montage der Sensorvorrichtung am Fahrzeug ermöglicht werden.

Ferner ist es denkbar, dass die Befestigungsmittel Rastmittel aufweisen können, die mit entsprechenden Gegenrastmitteln an einer fahrzeugseitigen Öffnung und/oder an einem fahrzeugseitigen Trägerelement in mechanische Wirkverbindung bringbar sind, und/oder dass die Befestigungsmittel eine Führungsschiene aufweisen, um die Sensorvorrichtung an einer fahrzeugseitigen Öffnung oder an einem fahrzeugseitigen Trägerelement einfach einzuschieben. Dadurch kann die Montage der Sensorvorrichtung am Fahrzeug noch weiter erleichtert werden.

Weiterhin wird die erfindungsgemäße Aufgabe durch einen Türgriff für ein Fahrzeug gelöst, welcher eine Sensorvorrichtung aufweist, die wie oben beschrieben ausgeführt sein kann. Mithilfe des erfindungsgemäßen Türgriffes werden die gleichen Vorteile erreicht, die oben im Zusammenhang mit der Sensorvorrichtung im Rahmen der Erfindung beschrieben wurden. Auf diese Vorteile wird vorliegend vollumfänglich Bezug genommen.

Des Weiteren wird die erfindungsgemäße Aufgabe durch einen Seitenspiegel für ein Fahrzeug gelöst, welcher eine Sensorvorrichtung aufweist, die wie oben beschrieben ausgeführt sein kann. Mithilfe des erfindungsgemäßen Seitenspiegels werden die gleichen Vorteile erreicht, die oben im Zusammenhang mit der Sensorvorrichtung im Rahmen der Erfindung beschrieben wurden. Auf diese Vorteile wird auch hier vollumfänglich Bezug genommen.

Zudem wird die erfindungsgemäße Aufgabe durch ein Verfahren zum Betreiben einer Sensorvorrichtung für ein Fahrzeug gelöst, wobei die Sensorvorrichtung in mindestens einem Betriebsmodus zum Erfassen mindestens einer Aktivierungshandlung eines Benutzers im ersten Aktivierungsbereich betrieben wird, um ein bewegbares Teil, insbesondere eine Tür oder einen Seitenspiegel, des Fahrzeuges zu betätigen, und wobei die Sensorvorrichtung in mindestens einem Betriebsmodus für eine Abstandsmessung, eine Geschwindigkeitsmessung und/oder eine Winkelmessung innerhalb des ersten Aktivierungsbereiches und/oder eines zweiten Aktivierungsbereiches und/oder eines dritten Aktivierungsbereiches betrieben wird, um mindestens ein Assistenzsystem des Fahrzeuges anzusteuern. Mithilfe des erfindungsgemäßen Verfahrens werden die gleichen Vorteile erreicht, die oben im Zusammenhang mit der Sensorvorrichtung im Rahmen der Erfindung beschrieben wurden. Auf diese Vorteile wird hierbei vollumfänglich Bezug genommen.

Vorteilhafterweise kann die Sensorvorrichtung zum Erfassen der mindestens einen Aktivierungshandlung eines Benutzers im ersten Aktivierungsbereich und für eine Abstandsmessung, eine Geschwindigkeitsmessung und/oder eine Winkelmessung innerhalb des ersten Aktivierungsbereiches und/oder eines zweiten Aktivierungsbereiches und/oder eines dritten Aktivierungsbereiches elektromagnetische Wellen im Radiofrequenzbereich (Radarwellen) nutzen. Mithilfe von Radarwellen können unterschiedliche Funktionen und Betriebsmodi der Sensorvorrichtung auf eine vorteilhafte Weise realisiert werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung einer Sensorvorrichtung im Sinne der Erfindung,
- Fig. 2: eine schematische Darstellung eines Fahrzeuges mit einer Sensorvorrichtung im Sinne der Erfindung,
- Fig. 3: eine schematische Darstellung eines Fahrzeuges mit einer Sensorvorrichtung in einem möglichen Betriebsmodus,
- Fig. 4: eine schematische Darstellung eines Fahrzeuges mit einer Sensorvorrichtung in einem möglichen Betriebsmodus,
- Fig. 5: eine schematische Darstellung einer Sensorvorrichtung an unterschiedlichen möglichen Einbauorten an einem Fahrzeug,
- Fig. 6: einen schematischen Aufbau einer Sensorvorrichtung im Sinne der Erfindung in einer Schnittdarstellung durch die Sensorvorrichtung, und
- Fig. 7: einen weiteren möglichen Aufbau einer Sensorvorrichtung im Sinne der Erfindung in einer Schnittdarstellung durch die Sensorvorrichtung.

In den nachfolgenden Figuren werden für die gleichen technischen Merkmale auch von unterschiedlichen Ausführungsbeispielen die identischen Bezugszeichen verwendet.

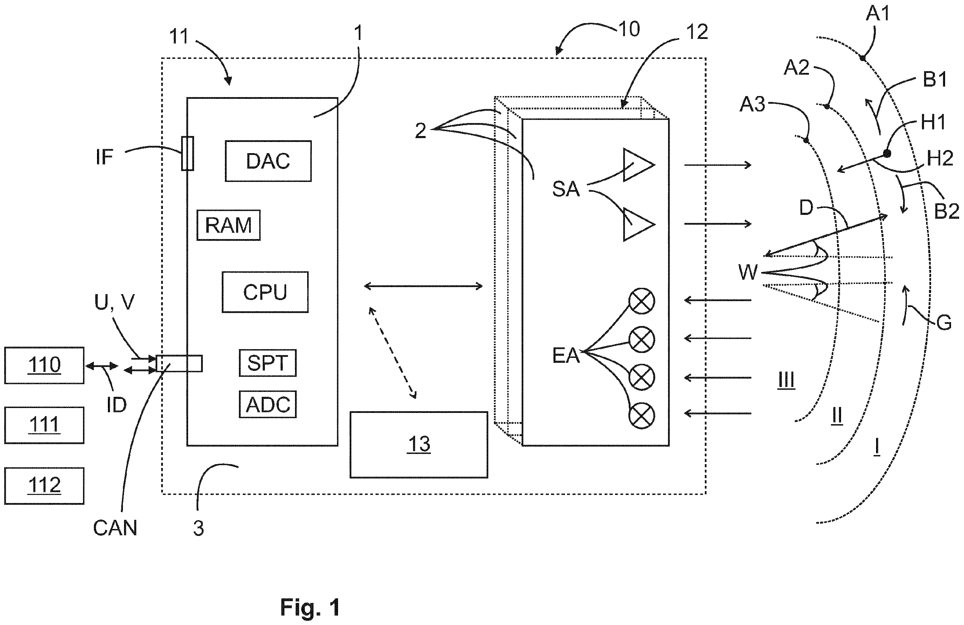

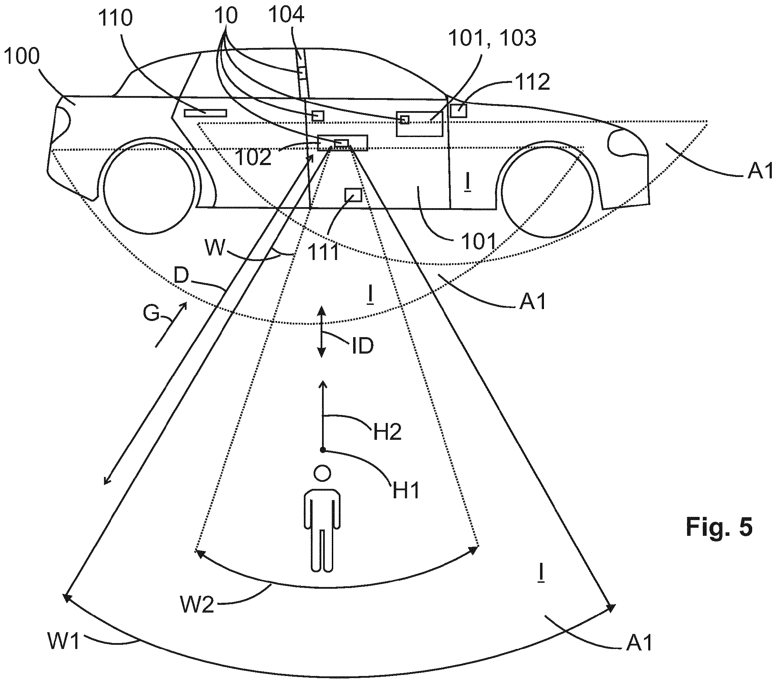

Die Figur 1 zeigt eine Sensorvorrichtung 10 im Sinne der Erfindung, die in einem Fahrzeug 100 an mehreren Stellen zum Einsatz kommen kann, wie dies im Nachfolgenden in der Figur 5 gezeigt wird. Die Sensorvorrichtung 10 umfasst eine Steuereinheit 11, die dazu dient, ein bewegbares Teil 101 des Fahrzeuges 100, beispielsweise eine Tür 101 oder einen Seitenspiegel 103 des Fahrzeuges 100 zu betätigen, bspw. zu verriegeln, zu entriegeln, zu öffnen oder zu schließen. Hierzu kann die Steuereinheit 11 eine fahrzeugseitige Schließvorrichtung 111 der Tür 101 oder eine Antriebsvorrichtung 112 des Seitenspiegels 103 kontaktieren und ein entsprechendes Steuersignal für eine korrespondierende Betätigung des bewegbaren Teils 101 übermitteln. Ferner umfasst die Sensorvorrichtung 10 eine Sensoreinheit 12 zur Überwachung mindestens eines ersten Aktivierungsbereiches A1 des bewegbaren Teils 101 des Fahrzeuges 100. Im Rahmen der Erfindung ist die Steuereinheit 11 dazu ausgeführt, das bewegbare Teil 101 des Fahrzeuges 100 zu betätigen, wenn mindestens eine Aktivierungshandlung H1, H2, B1, B2 eines Benutzers im ersten Aktivierungsbereich A1 durch die Sensoreinheit 12 erfasst wurde. Erfindungsgemäß ist die Sensoreinheit 12 dazu ausgeführt, die mindestens eine Aktivierungshandlung H1, H2, B1, B2 des Benutzers mithilfe von elektromagnetischen Wellen im Radiofrequenzbereich (Radarwellen) zu erfassen.

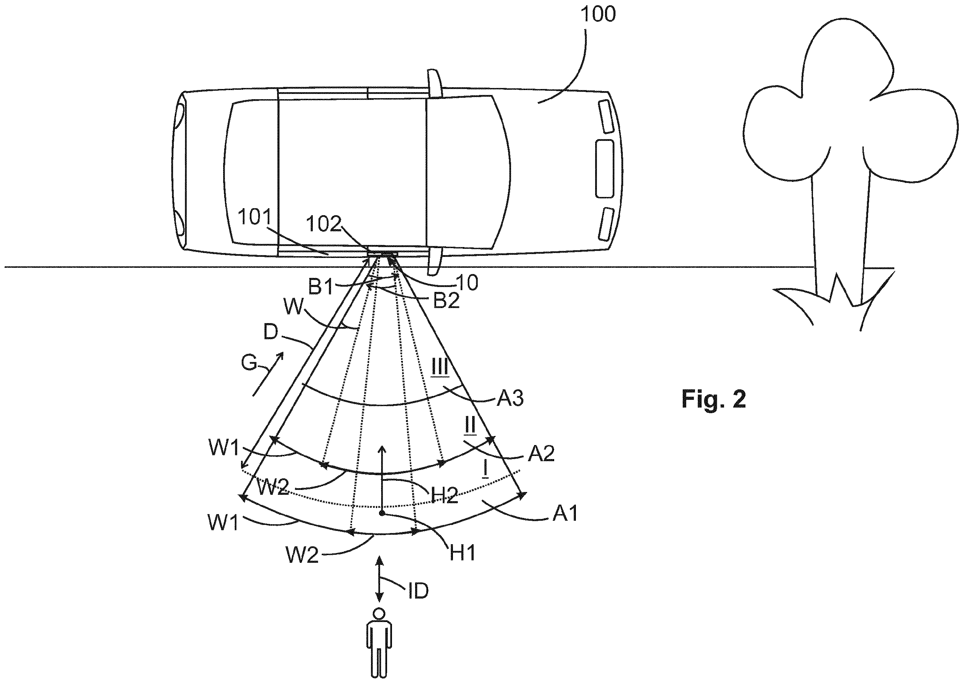

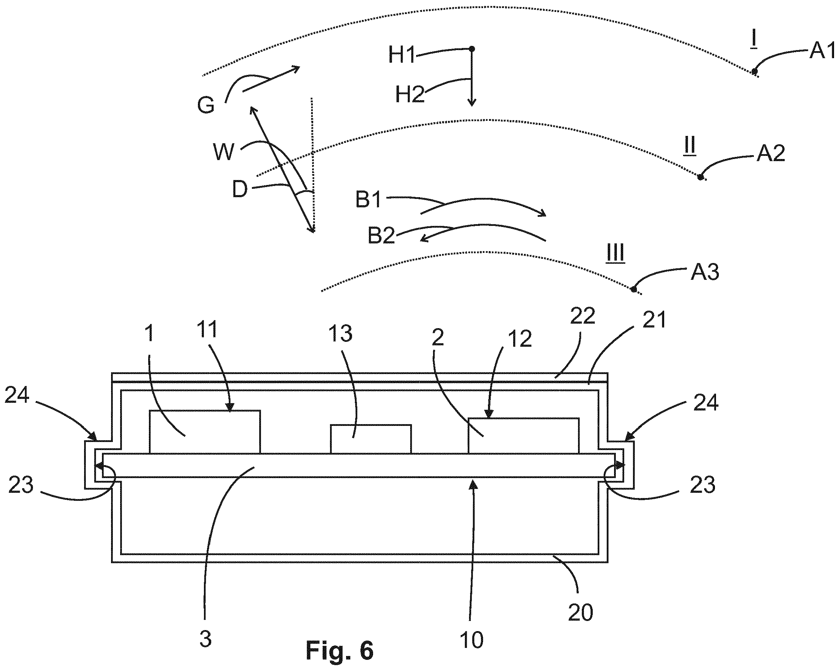

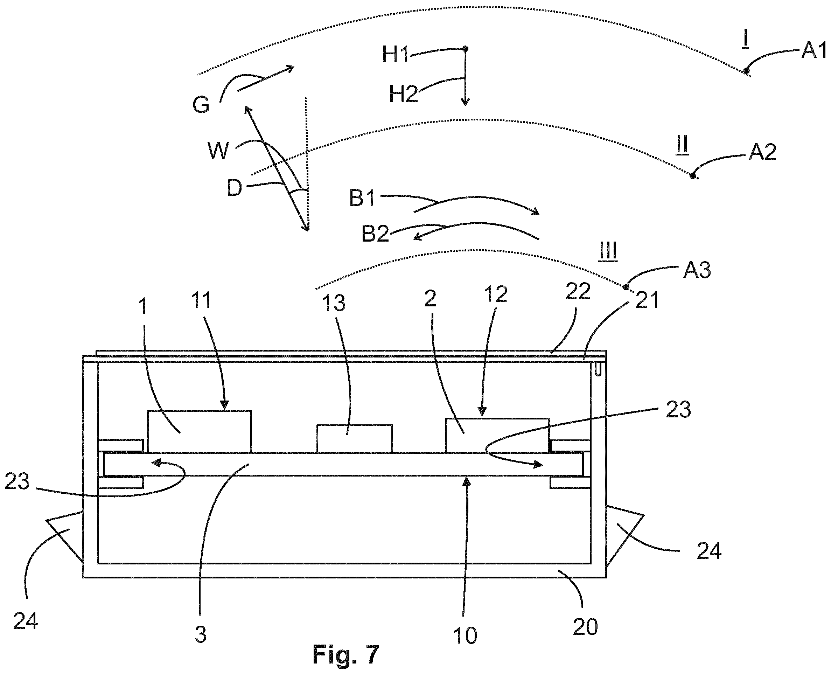

Wie es aus den Figuren 2 bis 5 zu erkennen ist, kann eine Sensorvorrichtung 10 im Rahmen der Erfindung zum Betätigen eines bewegbaren Teils 101 in Form einer Tür 101 des Fahrzeuges 100 ausgeführt sein. In diesem Falle kann die Sensorvorrichtung 10 direkt in einem Türgriff 102 angeordnet sein. Dabei kann die Sensorvorrichtung 10 an einer Öffnung in einer Außenhaut des Türgriffes 102 oder hinter der Außenhaut des Türgriffes 102 und somit geschützt und/oder unsichtbar von außen befestigt werden. Da die Radiowellen die meisten Kunststoffe ungestört passieren können, ist es dabei denkbar, dass die Außenhaut des Türgriffes 102 aus einem radardurchlässigen Kunststoff ausgeführt sein kann. Gleichwohl ist es aber auch denkbar, dass die Außenhaut des Türgriffes 102 mit einer Beschichtung 22 versehen sein kann (vgl. die Figuren 6 und 7), um das Erscheinungsbild des Türgriffes 102 an die Optik des Fahrzeuges 100 anzupassen. Bei der Beschichtung 22 kann es sich um eine Lackschicht, eine Sprühschicht oder eine mithilfe von Gasphasenabscheidung (CVD, PVD) oder mithilfe von Sputtern abgeschiedenen Schicht handeln. Die Beschichtung 22 kann eine Materialstärke zwischen 10 nm und 100 nm aufweisen.

Gleichwohl ist es aber auch denkbar, dass eine solche Sensorvorrichtung 10 beabstandet zum Türgriff 102 an der Tür 101, an einer B-Säule 104 oder in einem Seitenspiegel 103 des Fahrzeuges 100 angeordnet bzw. dort verbaut sein kann. Auch dort kann die Sensorvorrichtung 10 offen oder verdeckt angeordnet sein.

Wie es im Nachfolgenden die Figur 5 zeigt, kann eine Sensorvorrichtung 10 im Rahmen der Erfindung zum Betätigen eines bewegbaren Teils 101 in Form eines Seitenspiegels 103 des Fahrzeuges 100 ausgeführt sein. Dabei kann die Sensorvorrichtung 10 an einer Öffnung in einer Außenhaut des Seitenspiegels 103 oder hinter der Außenhaut des Seitenspiegels 103 und somit geschützt und/oder unsichtbar von außen befestigt sein. Hinsichtlich des Materials und der Beschichtung 22 der Außenhaut des Seitenspiegels 103 können die gleichen Maßnahmen vorgesehen werden, die oben bezüglich der Außenhaut des Türgriffes 102 beschrieben wurden. Auch im Falle eines Seitenspiegels 103 ist es weiterhin denkbar, dass eine solche Sensorvorrichtung 10 beabstandet zum Seitenspiegel 103 an einer B-Säule 104 oder in einem Türgriff 102 des Fahrzeuges 100 angeordnet bzw. dort verbaut sein kann.

Wie die Figur 1 zeigt und die Figur 5 schematisch andeutet, kann die Sensorvorrichtung 10 im Sinne der Erfindung mit einer Schließvorrichtung 111 der Tür 101 und/oder einer Antriebsvorrichtung 112 des Seitenspiegels 103 des Fahrzeuges 100 in einer Kommunikationsverbindung stehen, um diese Vorrichtungen entsprechend anzusteuern und somit das bewegbare Teil 101, also die Tür 101 oder den Seitenspiegel 103, zu betätigen. Bei einer Tür 101 als das bewegbare Teil 101 des Fahrzeuges 10 im Sinne der Erfindung ist es denkbar, dass die Steuereinheit 11 der Sensorvorrichtung 10 unterschiedliche Steuersignale zum Verriegeln, Entriegeln, Öffnen und/oder Schließen der Tür 101 in Abhängigkeit von der erfassten Aktivierungshandlung H1, H2, B1, B2 an die Schließvorrichtung 111 der Tür 101 schicken kann. Bei dem Seitenspiegel 103 als das bewegbare Teil 101 des Fahrzeuges 100 im Sinne der Erfindung ist es denkbar, dass die Steuereinheit 11 der Sensorvorrichtung 10 unterschiedliche Steuersignale zum Aufklappen, Zuklappen oder sogar Ausrichten des Seitenspiegels an die Antriebsvorrichtung 112 des Seitenspiegels 103 schicken kann.

Die Sensorvorrichtung 10 im Sinne der Erfindung kann weiterhin mit einer Sicherheitsvorrichtung 110 des Fahrzeuges 100 in einer Kommunikationsverbindung ID stehen, um eine Berechtigung eines Benutzers zu verifizieren, um das bewegbare Teil 101 des Fahrzeuges 100 betätigen zu dürfen. Ferner ist es möglich, dass die Sensorvorrichtung 10 selbst eine Sicherheitsabfrage ausführen kann. Somit kann die Sensorvorrichtung 10 einen Teil eines Keyless-Go-Systems oder eines Keyless-Entry-Systems des Fahrzeuges 100 bilden. Für die Kommunikationsverbindung ID mit der Sicherheitsvorrichtung 110 kann eine drahtlose Verbindung, beispielsweise mittels Funkwellen, oder eine drahtbehaftete Verbindung, beispielsweise über einen Bus CAN, genutzt werden.

Erfindungsgemäß werden durch die Sensorvorrichtung 10 zum Betätigen des bewegbaren Teils 101, insbesondere einer Tür 101 (Verriegeln, Entriegeln, Öffnen und/oder Schließen) oder eines Seitenspiegels 103 (Aufklappen, Zuklappen, Ausrichten), des Fahrzeuges 100, elektromagnetische Wellen im Radiofrequenzbereich bzw. Radarwellen genutzt. Zum Aussenden und Empfangen der Radarwellen dient die Sensoreinheit 12 der Sensorvorrichtung 10. Zum Analysieren, Auswerten und Verarbeiten der Radiowellen dient die Steuereinheit 11 der Sensorvorrichtung 10. Mithilfe von Radarwellen können unterschiedliche Aktivierungshandlungen H1, H2, B1, B2 eines Benutzers im ersten Aktivierungsbereich A1 der Sensorvorrichtung 10 erfasst werden. Für einen bestimmten Vorgang zum Betätigen des bewegbaren Teils 101 kann eine entsprechende Aktivierungshandlung H1, H2, B1, B2 vorgesehen sein. Mithilfe von Radarwellen können komplizierte Gesten sowie 2D- und/oder 3D-Bewegungsmuster erkannt werden. Bei den Radarwellen kann ein bestimmter Aktivierungsbereich A1, A2, A3, umfassend die Bandbreite W1, W2 und die Reichweite D1, D2, D3 des Aktivierungsbereiches A1, A2, A3, auf eine einfache Weise, beispielsweise mithilfe einer entsprechenden Sendefrequenz und/oder Sendepulsdauer an der Sensoreinheit 12 eingestellt werden. Somit kann die Sensorvorrichtung 10 unterschiedliche Aktivierungsbereiche A1, A2, A3 einstellen. Eine solche Sensorvorrichtung 10 ist außerdem relativ resistent gegen Umwelteinflüsse.

Zum einen ist es im Rahmen der Erfindung möglich, dass die Sensorvorrichtung 10 eine eigene Sensoreinheit 12 verwenden kann, um die mindestens eine Aktivierungshandlung H1, H2, B1, B2 des Benutzers zu erfassen.

Zum anderen ist es im Rahmen der Erfindung möglich, dass die Sensorvorrichtung 10 die vorhandene Sensorik des Fahrzeuges 100, beispielsweise eines Assistenzsystems des Fahrzeuges 100, nutzen kann, um mindestens einen ersten Aktivierungsbereich A1 des bewegbaren Teils 101 des Fahrzeuges 100 auf mindestens eine Aktivierungshandlung H1, H2, B1, B2 des Benutzers zu überwachen. Als ein entsprechendes Assistenzsystem des Fahrzeuges 100 kann ein Assistenzsystem zum automatisierten oder autonomen Fahren, zum automatisierten oder autonomen Einhalten einer Spur, zum automatisierten oder autonomen Überholvorgang, zum automatisierten oder autonomen Einparken und/oder zum Überwachen eines toten Winkels dienen. Aber auch ein Abstandsregeltempomat, eine automatische Distanzregelung, ein adaptives Sicherheitssystem, eine adaptive Bremsvorbereitung und/oder ein Stauassistent können mit einer entsprechenden Bandbreite W1, W2 dazu dienen, einen ersten Aktivierungsbereich A1 des bewegbaren Teils 101 des Fahrzeuges 100 auf mindestens eine Aktivierungshandlung H1, H2, B1, B2 des Benutzers zu überwachen.

Weiterhin ist es im Rahmen der Erfindung möglich, dass die Sensorvorrichtung 10 mit der eigenen Sensoreinheit 12 eine entsprechende Sensorik für mindestens ein Assistenzsystem des Fahrzeuges 100 bereitstellen kann.

Die Sensordaten der Sensoreinheit 12 können entweder zum Betätigen des bewegbaren Teils 101 oder zum Ansteuern eines Assistenzsystems des Fahrzeuges 100 verwendet werden. Zwischen diesen Betriebsmodi I, II, III der Sensorvorrichtung 10 kann vorteilhafterweise einen strikte Trennung erfolgen, um die Sicherheit im Betrieb des Fahrzeuges 100 zu gewährleisten. Da das bewegbare Teil 101 des Fahrzeuges 100 zumeist bei einem stehenden Fahrzeug 100 betätigt wird und die Assistenzsysteme des Fahrzeuges 100 meistens bei einem fahrenden Fahrzeug 100 aktiviert werden, kann es vorteilhaft sein, wenn die Sensorvorrichtung 10 in Abhängigkeit von der Geschwindigkeit V des Fahrzeuges 100 entweder zum Betätigen des bewegbaren Teils 101 des Fahrzeuges 100 oder zum assistierten und/oder autonomen Fahren des Fahrzeuges 100 verwendet wird.

Im Rahmen der Erfindung ist es denkbar, dass die Sensorvorrichtung 10 mindestens einen ersten Betriebsmodus I, einen zweiten Betriebsmodus II und/oder einen dritten Betriebsmodus III aufweisen kann.

Wie es aus der Figur 2 zum Vorschein kommt, kann der erste Betriebsmodus I zum Betätigen des bewegbaren Teils 101 des Fahrzeuges 100, beispielsweise zur Ansteuerung einer Schließvorrichtung 111 der Tür 101 (oder einer Antriebsvorrichtung 112 des Seitenspiegels 101) aktiviert werden. Eine Voraussetzung für den ersten Betriebsmodus I kann beispielsweise sein, dass das Fahrzeug 100 steht oder beinahe steht bzw. sich mit einer geringen Geschwindigkeit V unter 3 km/h bewegt. Somit kann die Sicherheit bereitgestellt werden, dass bei Fahren des Fahrzeuges 100 die Türen 101 des Fahrzeuges 100 nicht ungewollt geöffnet werden (oder die Seitenspiegel 103 ungewollt zugeklappt werden). Dadurch kann die Betätigung des bewegbaren Teils 101 des Fahrzeuges 100 sicher nur dann erfolgen, wenn das Fahrzeug 100 steht oder beinahe steht (beispielsweise nach dem Einparken).

Im ersten Betriebsmodus I der Sensorvorrichtung 10 kann der Sensoreinheit 12 eine Sendefrequenz im Frequenzbereich zwischen 76 GHz und 77 GHz (Long Range Radar oder LRR) zugeordnet sein. Auf diese Weise kann die Sensoreinheit 12 das Umfeld des Fahrzeuges 100 mithilfe von Fernbereichsradarwellen überwachen. Dies kann bei Assistenzsystemen mit einer ersten Reichweite D1 von bis zu 250 m von Vorteil sein. Aber auch zum Erkennen eines Benutzers, der sich dem Fahrzeug 100 nähert, kann eine hohe erste Reichweite D1 von Vorteil sein.

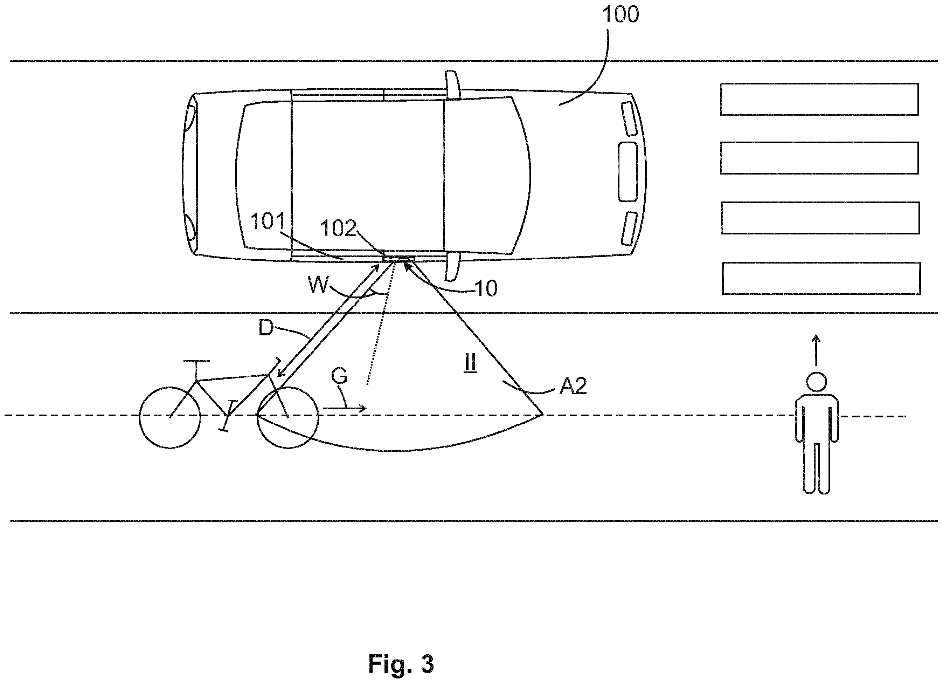

Wie es aus der Figur 3 zum Vorschein kommt, kann der zweite Betriebsmodus II der Sensorvorrichtung 10 beispielsweise bei einem fahrenden Fahrzeug 100 mit einer Geschwindigkeit V zwischen 3 km/h und 30 km/h, insbesondere zwischen 3 km/h und 20 km/h, vorzugsweise zwischen 3 km/h und 10 km/h aktiviert werden. In der Figur 3 ist eine Situation gezeigt, wenn das Fahrzeug 100 zum Stehen kommt, beispielsweise beim Einparken. In der gezeigten Situation nähert sich ein Fahrradfahrer der Tür 101 des Fahrzeugs 100. Die Tür 101 darf in dieser Situation nicht geöffnet werden, um den Fahrradfahrer nicht zu gefährden. Dabei kann die Sensorvorrichtung 10 im zweiten Betriebsmodus II betrieben werden, um den Fahrradfahrer rechtzeitig zu erkennen. In diesem zweiten Betriebsmodus II kann die Sensorvorrichtung 10 mit einem Assistenzsystem zum automatisierten oder autonomen Einhalten einer Spur, zum automatisierten oder autonomen Überholvorgang, zum automatisierten oder autonomen Einparken und/oder zum Überwachen eines toten Winkels kombiniert werden.

Im zweiten Betriebsmodus II der Sensorvorrichtung 10 kann der Sensoreinheit 12 eine Sendefrequenz im Frequenzbereich zwischen 77 GHz und 81 GHz (Short Range Radar oder SRR) zugeordnet sein. Dies kann bei Assistenzsystemen mit einer zweiten Reichweite D2 von bis zu 70 m von Vorteil sein.

Aber auch im ersten Betriebsmodus I, kann die zweite Reichweite D2 von Vorteil sein, um den ersten Aktivierungsbereich A1 einzugrenzen und dennoch einen schnellen Zugang zum Fahrzeug 100 zu ermöglichen.

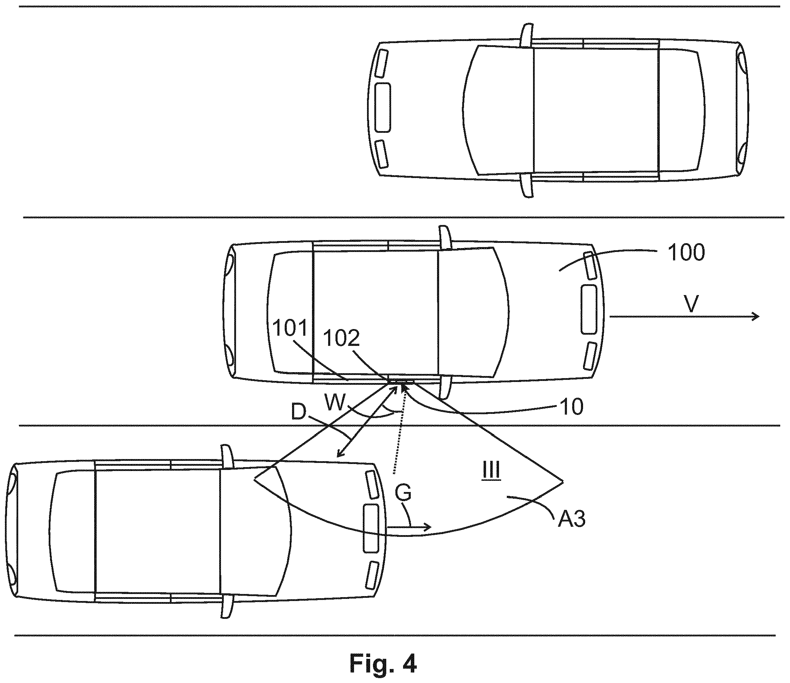

Wie es aus der Figur 4 zum Vorschein kommt, kann der dritte Betriebsmodus III der Sensorvorrichtung 10 beispielsweise bei einem fahrenden Fahrzeug 100 ab einer Geschwindigkeit V ab 10 km/h, insbesondere ab 20 km/h, vorzugsweise ab 30 km/h aktiviert werden. Dies ist der Geschwindigkeitsbereich, in welchem mehrere Assistenzsysteme des Fahrzeuges 100 betrieben werden können, beispielsweise Assistenzsysteme zum automatisierten oder autonomen Überholvorgang, zum automatisierten oder autonomen Einparken und/oder zum Überwachen eines toten Winkels. Bei einigen dieser Assistenzsysteme kann die erfindungsgemäße Sensorvorrichtung 10 direkt oder indirekt zum Einsatz kommen.

Im dritten Betriebsmodus III der Sensorvorrichtung 10 kann der Sensoreinheit 12 eine Sendefrequenz im Frequenzbereich zwischen 77 GHz und 81 GHz (Ultra Short Range Radar oder USRR) zugeordnet sein. Dies kann bei Assistenzsystemen mit einer dritten Reichweite D3 von bis zu 30 m von Vorteil sein.

Aber auch im ersten Betriebsmodus I, kann die dritte Reichweite D3 von Vorteil sein, um den ersten Aktivierungsbereich A1 noch weiter einzugrenzen und dennoch einen schnellen Zugang zum Fahrzeug zu ermöglichen.

Im Rahmen der Erfindung ist es weiterhin denkbar, dass bestimmte Assistenzsysteme die Informationen der erfindungsgemäßen Sensorvorrichtung 10 im zweiten Betriebsmodus II und andere Assistenzsysteme die Informationen der erfindungsgemäßen Sensorvorrichtung 10 im dritten Betriebsmodus III der Sensorvorrichtung 10 nutzen können.

Die Steuereinheit 11 kann im Rahmen der Erfindung zur Steuerung mindestens eines Assistenzsystems des Fahrzeuges 100 ausgeführt sein oder zumindest dazu ausgelegt sein, mindestens einem Assistenzsystem des Fahrzeuges 100 Informationen der Sensoreinheit 12 zu übermitteln.

Wie es des Weiteren die Figuren 1 und 6 zeigen, kann die Sensoreinheit 12 für eine Abstandsmessung D, eine Geschwindigkeitsmessung G und/oder eine Winkelmessung W innerhalb des ersten Aktivierungsbereiches A1 und/oder eines zweiten Aktivierungsbereiches A2 und/oder eines dritten Aktivierungsbereiches A3 ausgeführt sein. Auf diese Weise können mithilfe der Sensoreinheit 12 Informationen gesammelt werden, die für den Betrieb mindestens eines Assistenzsystems des Fahrzeuges 100 im zweiten Betriebsmodus II oder im dritten Betriebsmodus III der Sensorvorrichtung 10 nützlich sein können.

Wie es ferner die Figuren 2 und 5 zeigen, kann in mindestens einem, in mehreren oder in allen Betriebsmodi I, II, III der Sensorvorrichtung 10 der Sensoreinheit 12 unterschiedliche Bandbreiten W1, W2, beispielsweise eine erste Bandbreite W1 oder eine zweite Bandbreite W2, zugeordnet sein. Die jeweilige Bandbreite W1, W2 kann auf eine einfache Weise die Breite des jeweiligen Aktivierungsbereiches A1, A2, A3 bestimmen. Die Aktivierungsbereiche A1, A2, A3 können beispielsweise in Form von Erfassungskeulen ausgeführt sein. Unterschiedliche Bandbreiten W1, W2 können für verschiedene Funktionen von Vorteil sein. So kann zum Beispiel bei einem Abstandsregeltempomat sowie einer automatischen Distanzregelung ein schmaler Aktivierungsbereich von Vorteil sein. Bei anderen Assistenzsystemen oder zum Betätigen des bewegbaren Teils 101 kann ein breiter Aktivierungsbereich A1, A2, A3 von Vorteil sein, um eine möglichst umfassende Überwachung des Aktivierungsbereiches A1, A2, A3 um das Fahrzeug 100 herum zu ermöglichen.

Wie es weiterhin die Figuren 2 und 5 zeigen, kann die Sensoreinheit 12 eine Anwesenheit H1 und/oder eine Annäherung H2 des Benutzers als die mindestens eine Aktivierungshandlung H1, H2, B1, B2 im ersten Aktivierungsbereich A1 erfassen. Zudem kann die Sensoreinheit 12 derart ausgeführt sein, um mindestens ein erstes Bewegungsmuster B1 oder ein zweites Bewegungsmuster B2 durch eine Hand des Benutzers als die mindestens eine Aktivierungshandlung H1, H2, B1, B2 im ersten Aktivierungsbereich A1 zu erfassen. Auf diese Weise kann die Sensorvorrichtung 10 in Kombination mit unterschiedlichen Türgriffen 102, wie z. B. feststehenden Türgriffen 102, herausfahrbaren Türgriffen 102 oder beweglichen Türgriffen 102, und verschiedenen Sicherheitsvorrichtungen 110 eingesetzt werden. Das Erfassen eines ersten Bewegungsmusters B1 oder eines zweiten Bewegungsmusters B2 kann ebenfalls vorteilhaft sein, um einen Seitenspiegel 103 des Fahrzeuges 100 auf- oder zuzuklappen (vgl. die Figur 5).

Wie oben bei der Beschreibung der Figur 1 bereits erwähnt wurde, kann die Steuereinheit 11 zur Abfrage einer Zugangsberechtigung des Benutzers ausgeführt sein oder mit einer Sicherheitsvorrichtung 110 des Fahrzeuges in eine Kommunikationsverbindung ID stehen, um eine Zugangsberechtigung des Benutzers zu verifizieren.

Gemäß einer Ausführungsform der Erfindung ist es denkbar, dass die Steuereinheit 11 dazu ausgeführt sein kann, eine Abfrage einer Zugangsberechtigung des Benutzers auszuführen oder zu veranlassen, wenn mithilfe der Sensoreinheit 12 eine Anwesenheit H1 und/oder eine Annäherung H2 des Benutzers als die mindestens eine Aktivierungshandlung H1, H2, B1, B2 im ersten Aktivierungsbereich A1 erfasst wurde. Ein Entriegeln der Tür 101 als das bewegbare Teil 101 im Sinne der Erfindung kann beispielsweise dann eingeleitet werden, wenn mithilfe der Sensoreinheit 12 ein erstes Bewegungsmuster B1 im ersten Aktivierungsbereich A1 erfasst wurde. Durch Betätigen des Türgriffes 102 kann schließlich die Tür 101 geöffnet werden. Währenddessen wird die Sensorvorrichtung 10 im ersten Betriebsmodus I betrieben (s. die Figur 5).

Weiterhin ist es denkbar, dass die Steuereinheit 11 von der Sicherheitsvorrichtung 110 des Fahrzeuges 100 geweckt werden kann, um mithilfe der Sensoreinheit 12 den ersten Aktivierungsbereich A1 des bewegbaren Teils 101 des Fahrzeuges 100 auf mindestens eine Aktivierungshandlung H1, H2, B1, B2 zu überwachen. Ein Entriegeln der Tür 101 als das bewegbare Teil 101 im Sinne der Erfindung kann beispielsweise dann eingeleitet werden, wenn mithilfe der Sensoreinheit 12 eine Anwesenheit H1 und/oder eine Annäherung H2 des Benutzers im ersten Aktivierungsbereich A1 erfasst wurde. Zum Öffnen des bewegbaren Teils 101 kann die Sensoreinheit 12 ein erstes Bewegungsmuster B1 durch eine Hand des Benutzers sensieren. Somit kann der Benutzerkomfort beim Bedienen von feststehenden Türgriffen erhöht werden. Während dessen wird die Sensorvorrichtung 10 im ersten Betriebsmodus I betrieben (s. die Figur 5).

Zum Verriegeln des bewegbaren Teils 101 kann die Steuereinheit 11 den ersten Aktivierungsbereich A1 beispielsweise auf ein zweites Bewegungsmuster B2 überwachen. Auch hierbei wird die Sensorvorrichtung 10 im ersten Betriebsmodus I betrieben (s. die Figur 5).

Ferner ist es in der Figur 5 erkennbar, dass die Steuereinheit 11 dazu ausgeführt sein kann, zum Betätigen des bewegbaren Teils 101 in Form eines Seitenspiegels 103 den Seitenspiegel 103 einzuklappen oder auszuklappen, wenn mithilfe der Sensoreinheit 12 ein erstes Bewegungsmuster B1 oder ein zweites Bewegungsmuster B2 durch eine Hand des Benutzers als die mindestens eine Aktivierungshandlung H1, H2, B1, B2 im ersten Aktivierungsbereich A1 erfasst wurde. Somit kann ein Betätigen des Seitenspiegels 103 komfortabel gestaltet werden.

Im ersten Betriebsmodus I der Sensorvorrichtung 10 kann die Steuereinheit 11 dazu ausgeführt sein, ein Betätigen des bewegbaren Teils 101 zu stoppen, wenn ein Hindernis erfasst wurde, das der Betätigung des bewegbaren Teils 101 im Wege steht. Somit kann das bewegbare Teil 101 sicher betrieben werden.

Wie die Figur 5 weiterhin zeigt, kann die Sensorvorrichtung 10 am bewegbaren Teil 101 selbst, am Türgriff 102 des bewegbaren Teils 101, am Seitenspiegel 103 oder an der B-Säule 104 des Fahrzeuges 100 anordenbar sein.

Wie es ferner in den Figuren 1, 6 und 7 gezeigt ist, kann bei einer möglichen Ausführungsform der Sensorvorrichtung 10 mindestens eine weitere Sensoreinheit 13 vorgesehen sein, um die mindestens eine Aktivierungshandlung H1, H2, B1, B2 des Benutzers mithilfe von elektromagnetischen Wellen im optischen Frequenzbereich oder im Infrarotbereich oder mithilfe einer kapazitiven Messung zu erfassen. Somit kann eine Kombinationssensorik im Rahmen einer Sensorvorrichtung 10 bereitgestellt werden.

Weiterhin zeigen die Figuren 6 und 7, dass die Sensorvorrichtung 10 mit der Steuereinheit 11, der Sensoreinheit 12, und ggf. einer weiteren Sensoreinheit 13, in Form einer modularen Baueinheit ausgeführt sein kann, um die Montage der Sensorvorrichtung 10 zu vereinfachen.

Des Weiteren zeigen die Figuren 1, 6 und 7, dass die Sensorvorrichtung 10 eine Trägerplatte 3 für die Steuereinheit 11, die Sensoreinheit 12, und ggf. eine weitere Sensoreinheit 13, aufweisen kann. Somit kann ein einfacher Zusammenbau der Sensorvorrichtung 10 bereitgestellt werden.

Zudem zeigen die Figuren 1, 6 und 7, dass die Sensoreinheit 12 mindestens einen oder mehrere, beispielsweise zwei oder drei Transceiver 2 aufweisen kann. Jeder Transceiver 2 kann mindestens eine, vorzugsweise zwei Sendeantennen SA und mindestens eine, vorzugsweise vier, Empfangsantennen EA aufweisen. Somit kann eine verbesserte Erkennung unterschiedlicher Bewegungsmuster B1, B2 bereitgestellt werden.

Außerdem zeigen die Figuren 1, 6 und 7, dass die Steuereinheit 11 mindestens einen Microcontroller 1 aufweisen kann. Die Figur 1 zeigt zudem, dass der Microcontroller 1 weiterhin mindestens einen Wandler ADC, DAC, mindestens eine Signalverarbeitungseinheit SPT, mindestens eine Prozessoreinheit CPU, mindestens eine Speichereinheit RAM, mindestens eine Schnittstelle IF für weitere Peripheriefunktionen und/oder mindestens einen Anschluss CAN für Kommunikation und/oder Energieversorgung der Sensorvorrichtung 10 mit einer Spannung U, V aufweist. Der Microcontroller 1 kann die Informationen der Sensoreinheit 12 verarbeiten und analysieren, um unterschiedliche Betriebsmodi der Sensorvorrichtung 10 bereitzustellen.

Ferner zweigen die Figuren 6 und 7, dass ein Gehäuse 20 für die Sensorvorrichtung 10 vorgesehen sein kann, um die Sensorvorrichtung 10 geschützt vor Umwelt- und/oder Witterungseinflüssen aufzunehmen.

Gemäß der Ausführungsform der Figur 6 kann das Gehäuse 20 die Sensorvorrichtung 10 komplett umschließen. Somit kann die Sensorvorrichtung 10 besonders geschützt und sicher aufgenommen werden.

Gemäß der Ausführungsform der Figur 7 kann das Gehäuse 20 für die Sensorvorrichtung 10 ein vorteilhafterweise öffenbares Deckelelement 21 aufweisen, durch welches die Sensorvorrichtung 10 innerhalb des Gehäuses 20 einbringbar und/oder zwecks Reparatur entnehmbar ist. Das Deckelelement 21 kann dabei abnehmbar, drehbar (beispielsweise mithilfe einer Gelenkverbindung, zum Beispiel in Form eines Scharniers) oder verschiebbar (beispielsweise mithilfe einer Labyrinthführung) am Gehäuse 20 befestigt werden.

Gleichwohl ist es aber auch denkbar, dass als Deckelelement 21 im Rahmen der Erfindung ein Abschnitt einer Außenhaut des bewegbaren Teils 101 des Fahrzeuges 100, oder einer Außenhaut eines Türgriffes 102 oder einer Außenhaut eines Seitenspiegels 103 dienen kann. Somit kann die Sensorvorrichtung 10 hinter der Außenhaut des jeweiligen Bauteils angeordnet werden.

Das Gehäuse 20 für die Sensorvorrichtung 10 und/oder das Deckelelement 21 können aus einem radartransparenten Material, insbesondere Kunststoff, vorzugsweise Polymer, ausgebildet sein, um die Funktionsweise der Sensoreinheit 12 nicht zu beeinträchtigen.

Das Gehäuse 20 für die Sensorvorrichtung 10 und/oder das Deckelelement 21 können zumindest abschnittsweise mit einer Beschichtung 22 versehen sein (vgl. die Figuren 6 und 7). Die Beschichtung 22 kann eine Materialstärke von 10 nm bis 100 nm aufweisen. Die Beschichtung 22 kann beispielsweise in Form einer Lackschicht, einer Sprühschicht oder einer mithilfe von Gasphasenabscheidung oder mithilfe von Sputtern abgeschiedenen Schicht ausgebildet sein. Die Beschichtung 22 kann zudem Metallpartikel, vorzugsweise Chrom, und/oder Halbleitermaterial, vorzugsweise Silicium, aufweisen, um ein metallisches Erscheinungsbild zu erhalten.

Wie es die Figur 6 weiterhin zeigt, können innerhalb des Gehäuses 20 für die Sensorvorrichtung 10 mindestens ein oder mehrere Montagemittel 23 vorgesehen sein, um die Sensorvorrichtung 10 form- und/oder kraftschlüssig aufzunehmen und den Zusammenbau der Sensorvorrichtung 10 zu erleichtern. Als Montagemittel 23 sind unterschiedliche Rast- und/oder Klemm- und/oder Führungsmittel, beispielsweise in Form einer umlaufenden Nut 23 für die Trägerplatte 3 der Sensorvorrichtung 10, denkbar. In der Nut 23 kann die Trägerplatte 3 einfach eingesteckt werden.

Wie es außerdem die Figur 7 zeigt, kann das Gehäuse 20 für die Sensorvorrichtung 10 mindestens ein oder mehrere Befestigungsmittel 24, beispielsweise in Form von Rast- und/oder Klemm- und/oder Führungsmittel, aufweisen, die mit entsprechenden Gegenrastmitteln wechselwirken können, um die Sensorvorrichtung 10 form- und/oder kraftschlüssig an einer nicht dargestellten fahrzeugseitigen Öffnung und/oder an einem nicht dargestellten fahrzeugseitigen Trägerelement zu befestigen.

Die voranstehende Beschreibung der Figuren beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, ohne den Rahmen der Erfindung zu verlassen.

### Bezugszeichenliste

- 10: Sensorvorrichtung
- 11: Steuereinheit
- 12: Sensoreinheit
- 13: weitere Sensoreinheit

- 20: Gehäuse
- 21: Deckelelement
- 22: Beschichtung
- 23: Montagemittel, Nut
- 24: Befestigungsmittel

- 100: Fahrzeug
- 101: bewegbares Teil, Tür
- 102: Türgriff
- 103: Seitenspiegel
- 104: B-Säule

- 110: Sicherheitsvorrichtung
- 111: Schließvorrichtung
- 112: Antriebsvorrichtung

- A1: erster Aktivierungsbereich
- A2: zweiter Aktivierungsbereich
- A3: dritter Aktivierungsbereich

- H1, H2, B1, B2,: Aktivierungshandlung

- B1: erstes Bewegungsmuster
- B2: zweites Bewegungsmuster
- H1: Anwesenheit
- H2: Annäherung

- D: Abstandsmessung
- G: Geschwindigkeitsmessung
- W: Winkelmessung

- D1: erste Reichweite
- D2: zweite Reichweite
- D3: dritte Reichweite

- W1: erste Bandbreite
- W2: zweite Bandbreite

- U: Spannung

- V: Geschwindigkeit

- I: erster Betriebsmodus
- II: zweiter Betriebsmodus
- III: dritter Betriebsmodus

- 1: Microcontroller
- 2: Transceiver
- 3: Trägerplatte

- ID: Kommunikationsverbindung

- SA: Sendeantenne
- EA: Empfangsantenne

- ADC: Analog-Digital-Wandler
- DAC: Digital-Analog-Wandler
- SPT: Signalverarbeitungseinheit
- CPU: Prozessoreinheit
- RAM: Speichereinheit
- IF: Schnittstelle
- CAN: Anschluss für Kommunikation und/oder Energieversorgung

## Patentansprüche

1. Sensorvorrichtung (10) für ein Fahrzeug (100), aufweisend:
eine Steuereinheit (11) zum Betätigen eines bewegbaren Teils (101), insbesondere einer Tür (101) oder eines Seitenspiegels (103), des Fahrzeuges (100),
und eine Sensoreinheit (12) zur Überwachung mindestens eines ersten Aktivierungsbereiches (A1),
wobei die Steuereinheit (11) dazu ausgeführt ist, das bewegbare Teil (101) des Fahrzeuges (100) zu betätigen,
wenn mindestens eine Aktivierungshandlung (H1, H2, B1, B2) eines Benutzers im ersten Aktivierungsbereich (A1) durch die Sensoreinheit (12) erfasst wurde,
**dadurch gekennzeichnet,**
**dass** die Sensoreinheit (12) dazu ausgeführt ist, die mindestens eine Aktivierungshandlung (H1, H2, B1, B2) des Benutzers mithilfe von elektromagnetischen Wellen im Radiofrequenzbereich zu erfassen.

2. Sensorvorrichtung (10) nach Anspruch 1,
**dadurch gekennzeichnet,**
**dass** die Steuereinheit (11) zur Steuerung mindestens eines Assistenzsystems des Fahrzeuges ausgeführt ist,
oder dass die Steuereinheit (11) mit einer fahrzeugseitigen Steuervorrichtung eines Assistenzsystems des Fahrzeuges in eine Kommunikationsverbindung bringbar ist, wobei insbesondere das Assistenzsystem zum automatisierten oder autonomen Fahren, zum automatisierten oder autonomen Einhalten einer Spur, zum automatisierten oder autonomen Überholvorgang, zum automatisierten oder autonomen Einparken und/oder zum Überwachen eines toten Winkels ausgeführt ist, und/oder dass die Sensoreinheit (12) für eine Abstandsmessung (D), eine Geschwindigkeitsmessung (G) und/oder eine Winkelmessung (W) innerhalb des ersten Aktivierungsbereiches (A1) und/oder eines zweiten Aktivierungsbereiches (A2) und/oder eines dritten Aktivierungsbereiches (A3) ausgeführt ist.

3. Sensorvorrichtung (10) nach einem der vorhergehenden Ansprüche,
**dadurch gekennzeichnet,**
**dass** die Sensorvorrichtung (10) mindestens einen ersten Betriebsmodus (I), einen zweiten Betriebsmodus (II) und/oder einen dritten Betriebsmodus (III) aufweist, und/oder dass der erste Betriebsmodus (I) bei stehendem Fahrzeug, der zweite Betriebsmodus (II) bei einem fahrenden Fahrzeug mit einer Geschwindigkeit (V) zwischen 3 km/h und 30 km/h, insbesondere zwischen 3 km/h und 20 km/h, vorzugsweise zwischen 3 km/h und 10 km/h und/oder der dritte Betriebmodus (III) ab einer Geschwindigkeit (V) ab 10 km/h, insbesondere ab 20 km/h, vorzugsweise ab 30 km/h aktivierbar ist.

4. Sensorvorrichtung (10) nach einem der vorhergehenden Ansprüche,
**dadurch gekennzeichnet,**
**dass** in mindestens einem Betriebsmodus (I, II, III) die Sensorvorrichtung (10) zum Erfassen der mindestens einen Aktivierungshandlung (H1, H2, B1, B2) des Benutzers im ersten Aktivierungsbereich (A1) betreibbar ist,
und/oder dass in mindestens einem Betriebsmodus (I, II, III) die Sensorvorrichtung (10) für eine Abstandsmessung (D), eine Geschwindigkeitsmessung (G) und/oder eine Winkelmessung (W) innerhalb des ersten Aktivierungsbereiches (A1) und/oder eines zweiten Aktivierungsbereiches (A2) und/oder eines dritten Aktivierungsbereiches (A3) betreibbar ist,
und/oder dass in mindestens einem Betriebsmodus (I, II, III) die Sensorvorrichtung (10) zum Erfassen eines Hindernisses beim Betätigen des bewegbaren Teils (101) des Fahrzeuges betreibbar ist.

5. Sensorvorrichtung (10) nach einem der vorhergehenden Ansprüche,
**dadurch gekennzeichnet,**
**dass** im ersten Betriebsmodus (I) der Sensorvorrichtung (10) der Sensoreinheit (12) eine Sendefrequenz im Frequenzbereich zwischen 76 GHz und 77 GHz zugeordnet ist,
und/oder dass im zweiten Betriebsmodus (II) der Sensorvorrichtung (10) der Sensoreinheit (12) eine Sendefrequenz im Frequenzbereich zwischen 77 GHz und 81 GHz zugeordnet ist,
und/oder dass im dritten Betriebsmodus (III) der Sensorvorrichtung (10) der Sensoreinheit (12) eine Sendefrequenz im Frequenzbereich zwischen 77 GHz und 81 GHz zugeordnet ist.

6. Sensorvorrichtung (10) nach einem der vorhergehenden Ansprüche,
**dadurch gekennzeichnet,**
**dass** in mindestens einem Betriebsmodus (I, II, III), insbesondere im ersten Betriebsmodus (I), der Sensorvorrichtung (10) der Sensoreinheit (12) eine erste Reichweite (D1) im Bereich von ungefähr 250 m zugeordnet ist,
und/oder dass in mindestens einem Betriebsmodus (I, II, III), insbesondere im zweiten Betriebsmodus (II), der Sensorvorrichtung (10) der Sensoreinheit (12) eine zweite Reichweite (D2) im Bereich von ungefähr 70 m zugeordnet ist,
und/oder dass in mindestens einem Betriebsmodus (I, II, III), insbesondere im dritten Betriebsmodus (III), der Sensorvorrichtung (10) der Sensoreinheit (12) eine dritte Reichweite (D3) im Bereich von ungefähr 30 m zugeordnet ist,
und/oder dass in mindestens einem Betriebsmodus (I, II, III) der Sensorvorrichtung (10) der Sensoreinheit (12) eine erste Bandbreite (W1) oder eine zweite Bandbreite (W2) zugeordnet sind/ist.

7. Sensorvorrichtung (10) nach einem der vorhergehenden Ansprüche,
**dadurch gekennzeichnet,**
**dass** die Sensoreinheit (12) dazu ausgeführt ist, eine Anwesenheit (H1) und/oder eine Annäherung (H2) des Benutzers als die mindestens eine Aktivierungshandlung (H1, H2, B1, B2) im ersten Aktivierungsbereich (A1) zu erfassen,
und/oder dass die Sensoreinheit (12) dazu ausgeführt ist, mindestens ein erstes Bewegungsmuster (B1) oder ein zweites Bewegungsmuster (B2) durch eine Hand des Benutzers als die mindestens eine Aktivierungshandlung (H1, H2, B1, B2) im ersten Aktivierungsbereich (A1) zu erfassen.

8. Sensorvorrichtung (10) nach einem der vorhergehenden Ansprüche,
**dadurch gekennzeichnet,**
**dass** die Steuereinheit (11) zur Sicherheitsabfrage des Benutzers ausgeführt ist, oder dass die Steuereinheit (11) mit einer Sicherheitsvorrichtung (110) des Fahrzeuges in eine Kommunikationsverbindung (ID) bringbar ist, um eine Zugangsberechtigung des Benutzers zu verifizieren,
und/oder dass die Steuereinheit (11) dazu ausgeführt ist, eine Sicherheitsabfrage des Benutzers auszuführen oder zu veranlassen, wenn mithilfe der Sensoreinheit (12) eine Anwesenheit (H1) und/oder eine Annäherung (H2) des Benutzers als die mindestens eine Aktivierungshandlung (H1, H2, B1, B2) im ersten Aktivierungsbereich (A1) erfasst wurde,
oder dass die Steuereinheit (11) von einer Sicherheitsvorrichtung (110) des Fahrzeuges einschaltbar ist, um mithilfe der Sensoreinheit (12) den ersten Aktivierungsbereich (A1) auf mindestens eine Aktivierungshandlung (H1, H2, B1, B2) zu überwachen.

9. Sensorvorrichtung (10) nach einem der vorhergehenden Ansprüche,
**dadurch gekennzeichnet,**
**dass** die Steuereinheit (11) dazu ausgeführt ist, zum Betätigen des bewegbaren Teils (101) ein Entriegeln des bewegbaren Teils (101) zu veranlassen, wenn mithilfe der Sensoreinheit (12) eine Anwesenheit (H1) und/oder eine Annäherung (H2) des Benutzers oder ein erstes Bewegungsmuster (B1) durch eine Hand des Benutzers als die mindestens eine Aktivierungshandlung (H1, H2, B1, B2) im ersten Aktivierungsbereich (A1) erfasst wurde,
und/oder dass die Steuereinheit (11) dazu ausgeführt ist, zum Betätigen des bewegbaren Teils (101) ein Verriegeln des bewegbaren Teils (101) zu veranlassen, wenn ein zweites Bewegungsmuster (B2) durch eine Hand des Benutzers als die mindestens eine Aktivierungshandlung (H1, H2, B1, B2) im ersten Aktivierungsbereich (A1) erfasst wurde,
und/oder dass die Steuereinheit (11) dazu ausgeführt ist, zum Betätigen des bewegbaren Teils (101) ein Öffnen des bewegbaren Teils (101) zu veranlassen, wenn mithilfe der Sensoreinheit (12) ein erstes Bewegungsmuster (B1) durch eine Hand des Benutzers als die mindestens eine Aktivierungshandlung (H1, H2, B1, B2) im ersten Aktivierungsbereich (A1) erfasst wurde,
und/oder dass die Steuereinheit (11) dazu ausgeführt ist, zum Betätigen des bewegbaren Teils (101) ein Einklappen oder Ausklappen des bewegbaren Teils (101) zu veranlassen, wenn mithilfe der Sensoreinheit (12) ein erstes Bewegungsmuster (B1) oder ein zweites Bewegungsmuster (B2) durch eine Hand des Benutzers als die mindestens eine Aktivierungshandlung (H1, H2, B1, B2) im ersten Aktivierungsbereich (A1) erfasst wurde.

10. Sensorvorrichtung (10) nach einem der vorhergehenden Ansprüche,
**dadurch gekennzeichnet,**
**dass** die Steuereinheit (11) dazu ausgeführt ist, ein Betätigen des bewegbaren Teils (101) zu stoppen, wenn ein Hindernis erfasst wurde, das der Betätigung des bewegbaren Teils (101) im Wege steht,
und/oder dass die Sensorvorrichtung (10) am bewegbaren Teil (101), an einem Türgriff (102) des bewegbaren Teils (101), an einem Seitenspiegel (103) oder an einer B-Säule (104) des Fahrzeuges (100) anordenbar ist.

11. Sensorvorrichtung (10) nach einem der vorhergehenden Ansprüche,
**dadurch gekennzeichnet,**
**dass** mindestens eine weitere Sensoreinheit (13) vorgesehen ist, um die mindestens eine Aktivierungshandlung (H1, H2, B1, B2) des Benutzers mithilfe von elektromagnetischen Wellen im optischen Frequenzbereich oder im Infrarotbereich oder mithilfe einer kapazitiven Messung zu erfassen,
und/oder dass die Sensorvorrichtung (10) mit der Steuereinheit (11), der Sensoreinheit (12), und ggf. einer weiteren Sensoreinheit (13), in Form einer modularen Baueinheit ausgeführt ist,
und/oder dass die Sensorvorrichtung (10) eine Trägerplatte (3) für die Steuereinheit (11), die Sensoreinheit (12), und ggf. eine weitere Sensoreinheit (13), aufweist.

12. Sensorvorrichtung (10) nach einem der vorhergehenden Ansprüche,
**dadurch gekennzeichnet,**
**dass** die Sensoreinheit (12) mindestens einen Transceiver (2) aufweist,
wobei insbesondere der Transceiver (2) mindestens eine, vorzugsweise zwei, Sendeantennen (SA) und mindestens eine, vorzugsweise vier, Empfangsantennen (EA) aufweist,
und/oder dass die Steuereinheit (11) mindestens einen Microcontroller (1) aufweist, wobei insbesondere der Microcontroller (1) mindestens einen Wandler (ADC, DAC), mindestens eine Signalverarbeitungseinheit (SPT), mindestens eine Prozessoreinheit (CPU), mindestens eine Speichereinheit (RAM), mindestens eine Schnittstelle (IF) und/oder mindestens einen Anschluss (CAN) für Kommunikation und/oder Energieversorgung aufweist.

13. Sensorvorrichtung (10) nach einem der vorhergehenden Ansprüche,
**dadurch gekennzeichnet,**
**dass** ein Gehäuse (20) für die Sensorvorrichtung (10) vorgesehen ist, um die Sensorvorrichtung (10) geschützt vor Umwelt- und/oder Witterungseinflüssen aufzunehmen,
und/oder dass das Gehäuse (20) die Sensorvorrichtung (10) komplett umschließt, wobei insbesondere das Gehäuse (20) für die Sensorvorrichtung (10) ein Deckelelement (21) aufweist, durch welchen die Sensorvorrichtung (10) innerhalb des Gehäuses (10) einbringbar ist, wobei bevorzugt das Gehäuse (20) für die Sensorvorrichtung (10) und/oder das Deckelelement (21) aus einem radartransparenten Material, insbesondere Kunststoff, vorzugsweise Polymer, ausgebildet ist,
und/oder dass das Gehäuse (20) für die Sensorvorrichtung (10) und/oder das Deckelelement (21) zumindest abschnittsweise mit einer Beschichtung (22), vorzugsweise mit einer Materialstärke von 10 nm bis 100 nm, versehen sind/ist, wobei insbesondere die Beschichtung (22) in Form einer Lackschicht, einer Sprühschicht oder einer mithilfe von Gasphasenabscheidung (CVD, PVD) oder mithilfe von Sputtern abgeschiedenen Schicht ausgebildet ist,
und/oder dass die Beschichtung Metallpartikel, vorzugsweise Chrom, und/oder Halbleitermaterial, vorzugsweise Silicium, aufweist.

14. Sensorvorrichtung (10) nach einem der vorhergehenden Ansprüche,
**dadurch gekennzeichnet,**
**dass** das Gehäuse (20) für die Sensorvorrichtung (10) mindestens ein oder mehrere Montagemittel (23) aufweist, um die Sensorvorrichtung (10) innerhalb des Gehäuses (10) form- und/oder kraftschlüssig aufzunehmen,
und/oder dass die Montagemittel (23) dazu ausgeführt sind, um die Trägerplatte (3) der Sensorvorrichtung (10) innerhalb des Gehäuses (10) einzuklemmen,
und/oder dass die Montagemittel (23) eine umlaufende Nut für die Trägerplatte (3) der Sensorvorrichtung (10) aufweisen, in welcher die Trägerplatte (3) einsteckbar ist, und/oder dass das Gehäuse (20) für die Sensorvorrichtung (10) mindestens ein oder mehrere Befestigungsmittel (24) aufweist, um die Sensorvorrichtung (10) form- und/oder kraftschlüssig an einer fahrzeugseitigen Öffnung und/oder an einem fahrzeugseitigen Trägerelement zu befestigen,
und/oder dass die Befestigungsmittel (24) Rastmittel aufweisen, die mit entsprechenden Gegenrastmitteln an einer fahrzeugseitigen Öffnung und/oder an einem fahrzeugseitigen Trägerelement in mechanische Wirkverbindung bringbar sind,
und/oder dass die Befestigungsmittel (24) eine Führungsschiene aufweisen, um die Sensorvorrichtung (10) an einer fahrzeugseitigen Öffnung oder an einem fahrzeugseitigen Trägerelement einfach einzuschieben.

15. Türgriff (102) für ein Fahrzeug (100), aufweisend mindestens eine Sensorvorrichtung (10) nach einem der vorhergehenden Ansprüche.

16. Seitenspiegel (103) für ein Fahrzeug (100), aufweisend mindestens eine Sensorvorrichtung (10) nach einem der vorhergehenden Ansprüche.

17. Verfahren zum Betreiben einer Sensorvorrichtung (10) für ein Fahrzeug (100),
**dadurch gekennzeichnet,**
**dass** die Sensorvorrichtung (10) in mindestens einem Betriebsmodus (I, II III) zum Erfassen mindestens einer Aktivierungshandlung (H1, H2, B1, B2) eines Benutzers im ersten Aktivierungsbereich (A1) betrieben wird, um ein bewegbares Teil (101), insbesondere eine Tür (101) oder einen Seitenspiegel (103), des Fahrzeuges (100) zu betätigen,
und **dass** die Sensorvorrichtung (10) in mindestens einem Betriebsmodus (I, II, III) für eine Abstandsmessung (D), eine Geschwindigkeitsmessung (G) und/oder eine Winkelmessung (W) innerhalb des ersten Aktivierungsbereiches (A1) und/oder eines zweiten Aktivierungsbereiches (A2) und/oder eines dritten Aktivierungsbereiches (A3) betrieben wird, um mindestens ein Assistenzsystem des Fahrzeuges anzusteuern.

18. Verfahren nach dem vorhergehenden Anspruch,
**dadurch gekennzeichnet,**
**dass** die Sensorvorrichtung (10) zum Erfassen der mindestens einen Aktivierungshandlung (H1, H2, B1, B2) eines Benutzers im ersten Aktivierungsbereich (A1) und für eine Abstandsmessung (D), eine Geschwindigkeitsmessung (G) und/oder eine Winkelmessung (W) innerhalb des ersten Aktivierungsbereiches (A1) und/oder eines zweiten Aktivierungsbereiches (A2) und/oder eines dritten Aktivierungsbereiches (A3) elektromagnetische Wellen im Radiofrequenzbereich nutzt.
